# EUROPEAN PATENT APPLICATION

(11) **EP 4 550 861 A1**
(43) Date of publication of application: **07.05.2025**
(21) Application number: 23842094.7
(22) Date of filing: 30.06.2023
(51) Int. Cl.: H04W 8/24, H04W 72/04

(54) **COMMUNICATION METHOD AND APPARATUS, AND STORAGE MEDIUM AND CHIP SYSTEM**

(30) Priority: 18.07.2022 CN 202210870334
(71) Applicant: Huawei Technologies Co., Ltd., Shenzhen, Guangdong 518129 (CN)
(72) Inventor: SHA, Tong, Shenzhen, Guangdong 518129 (CN); XIE, Xi, Shenzhen, Guangdong 518129 (CN); CHANG, Junren, Shenzhen, Guangdong 518129 (CN); WANG, Jianlin, Shenzhen, Guangdong 518129 (CN); XU, Haibo, Shenzhen, Guangdong 518129 (CN)
(74) Representative: Goddar, Heinz J.
(86) International application number: PCT/CN2023/105112
(87) International publication number: WO 2024/017029

(57) **Abstract**

A communication method and apparatus, a storage medium, and a chip system relate to the field of communication technologies, to reduce a bit error and/or a packet loss. In this application, a terminal device receives configuration information from a network device, where the configuration information is used to configure a first carrier. The terminal device sends first information to the network device. The first information indicates to stop data transmission on the first carrier. Therefore, after receiving the information, the network device may stop data scheduling on the first carrier, to reduce the bit error and/or the packet loss. The first information further indicates that the terminal device stops measurement on the first carrier. Therefore, the network device may determine that a reason for receiving no measurement result of the first carrier from the terminal device is that a first terminal device does not measure the first carrier, rather than another reason (for example, signal quality of the first carrier does not meet a preset measurement reporting condition), and then the network device can activate a carrier more properly.

## Description

### CROSS-REFERENCE TO RELATED APPLICATIONS

This application claims priority to Chinese Patent Application No. 202210870334.9, filed with the China National Intellectual Property Administration on July 18, 2022 and entitled "COMMUNICATION METHOD AND APPARATUS, STORAGE MEDIUM, AND CHIP SYSTEM", which is incorporated herein by reference in its entirety.

### TECHNICAL FIELD

This application relates to the field of communication technologies, and in particular, to a communication method and apparatus, a storage medium, and a chip system.

### BACKGROUND

In communication systems such as a long term evolution (long term evolution, LTE) system and a new radio (new radio, NR) system, a plurality of carriers may be aggregated for use through a carrier aggregation (carrier aggregation, CA) technology, to increase a bandwidth. In the CA technology, a carrier corresponding to a primary cell (primary cell, PCell) is referred to as a primary carrier component (primary carrier component, PCC), and a carrier corresponding to a secondary cell (secondary cell, SCell) is referred to as a secondary carrier component (secondary carrier component, SCC). A network device configures a corresponding quantity of secondary carriers for a terminal device based on a capability reported by the terminal device.

In some scenarios, a carrier aggregation capability of the terminal device may be lower than a carrier aggregation capability reported by the terminal device to the network device, causing a bit error and a packet loss. For example, the terminal device supports communication with a plurality of associated communication systems (for example, a communication system A and a communication system B) by using a plurality of user identities. The communication with the plurality of communication systems shares a hardware capability of the terminal device. A service of the communication system A preempts a hardware resource (for example, a baseband processing resource and/or a radio frequency resource) that needs to be used for communication on a carrier of the communication system B. In this case, if a network device in the communication system B schedules data on the carrier, because the hardware resource of the carrier is preempted by the communication system A, the terminal device cannot receive or send the data on the carrier, consequently causing the packet loss. In addition, because the hardware resource of the carrier is occupied by the communication system A, if the terminal device receives the data on the carrier, the terminal device cannot normally decode the data, causing the bit error.

### SUMMARY

This application provides a communication method and apparatus, a storage medium, and a chip system, to reduce a bit error and/or a packet loss.

According to a first aspect, this application provides a communication method. The method may be performed by a terminal device or a chip, a unit, or a module in the terminal device, and an example in which the method is performed by the terminal device is used for description in this application. The method includes:
The terminal device receives configuration information from a network device, where the configuration information is used to configure a first carrier. The terminal device sends first information to the network device, where the first information indicates to stop data transmission on the first carrier, and the first information further indicates that the terminal device stops measurement on the first carrier.

In some scenarios, a capability of the terminal device may be temporarily limited. For example, because a plurality of communication systems share a hardware resource of the terminal device, the terminal device cannot perform data transmission on the first carrier configured by the network device. If the network device does not know that the terminal device cannot support the first carrier, the network device may continue to schedule data on the first carrier. As a result, the terminal device cannot correctly decode the data on the first carrier, which wastes carrier resources and greatly reduces user experience.

In this embodiment of this application, when the terminal device cannot receive or send data on the first carrier, the terminal device may notify the network device by using the first information, so that the network device can stop data scheduling on the first carrier, to reduce a bit error and/or a packet loss.

In addition, when the network device configures the first carrier for the terminal device, because the terminal device may indicate, to the network device by sending the first information, that the terminal device stops measurement on the first carrier, the network device can determine that a reason for receiving no measurement result of the first carrier from the terminal device is that a first terminal device does not measure the first carrier, rather than another reason (for example, signal quality of the first carrier does not meet a preset measurement reporting condition), and then the network device can activate a carrier more properly.

For example, the terminal device supports communication with a plurality of associated communication systems (for example, a communication system A and a communication system B) by using a plurality of user identities, and the communication with the plurality of communication systems shares a hardware capability of the terminal device. When hardware resources needed by the communication system A and the communication system B conflict, the terminal device may determine a communication system whose service is more important or has a higher priority, and then the terminal device may allocate a hardware resource to the high-priority service (for example, the terminal device allocates a hardware resource of the first carrier to the communication system A). Therefore, the terminal device does not have a capability of performing communication with a communication system (the communication system B) corresponding to a low-priority service based on the first carrier on which a resource conflict occurs.

In addition, if the network device configures measurement of the first carrier for the terminal device, and if the terminal device still needs to maintain measurement on the first carrier, in a period of time of measuring the first carrier, the terminal device allocates a hardware resource used for communication on another carrier to the first carrier for measurement. This causes interruption of a service (for example, a service of the communication system A and/or a service of the communication system B). However, because data transmission on the first carrier has been stopped, a necessity that the terminal device maintains measurement on the first carrier is low. In this embodiment of this application, the terminal device stops measurement on the first carrier, so that interruption of another service caused by measurement on the first carrier can be avoided.

In a possible implementation, first indication information may be information indicating to restrict, suspend, or deactivate the first carrier or restrict activation of the first carrier. The first carrier being in a restricted state, a suspended state, or a deactivated state may include that the first carrier stops being used for data transmission, and the terminal device stops measurement on the first carrier.

It can be learned that, in this implementation, the terminal device may clarify, to the network device, behavior of the terminal device when the first carrier is in the restricted state or the suspended state. For example, under a condition in which the capability of the terminal device is temporarily limited due to a reason such as dual-card hardware resource sharing, the terminal device cannot receive or send data on the first carrier that the terminal device requests to restrict or suspend, and cannot perform measurement, to ensure that the network device and the terminal device have a consistent understanding of the first carrier being in the restricted state or the suspended state.

In another possible implementation, the first indication information may include information indicating to deactivate the first carrier or restrict activation of the first carrier, and include information indicating to deactivate the first carrier or restrict activation of the first carrier due to a hardware resource conflict. The hardware resource conflict may alternatively be "hardware resource sharing, dual-card hardware resource sharing, a dual-card reason, dual-card behavior, a dual-card purpose", or the like. Therefore, if the network device determines, based on the first information, that the terminal device deactivates the first carrier or restricts activation of the first carrier due to the hardware resource conflict, the network device determines that the first carrier stops being used for data transmission, and the terminal device stops measurement on the first carrier.

In another possible implementation, the first information includes information indicating to deactivate, restrict, or suspend the first carrier or restrict activation of the first carrier. The first information further includes information indicating that the terminal device stops measurement on the first carrier. The information indicating to deactivate, restrict, or suspend the first carrier or restrict activation of the first carrier is different from the information indicating that the terminal device stops measurement on the first carrier. In this example, the first carrier being in a deactivated state, a restricted state, or a suspended state may include that the first carrier stops being used for data transmission, and may not include that the terminal device stops measurement on the first carrier.

In a possible implementation, the terminal device sends the first information to the network device when the terminal device does not have a capability of performing communication based on the first carrier.

That the terminal device determines that the terminal device does not have the capability of performing communication based on the first carrier may be understood as that the terminal device cannot receive a downlink and/or send an uplink on the first carrier, including at least one of downlink and/or uplink scheduling information, downlink and/or uplink service data, downlink and/or uplink signaling, a downlink message and/or an uplink message, a downlink feedback and/or an uplink feedback, and a downlink reference signal and/or an uplink reference signal; or the terminal device cannot support an activated state of the first carrier. If the network device configures the first carrier for the terminal device, it indicates that the network device considers that the terminal device has the capability of performing communication based on the first carrier. The terminal device sends the first information to the network device when the terminal device does not have the capability of performing communication based on the first carrier, so that the network device may stop data scheduling on the first carrier, to reduce a bit error and/or a packet loss.

In a possible implementation, the terminal device notifies, by using the first information, the network device that the terminal device has stopped data transmission on the first carrier and stopped measurement on the first carrier. The terminal device may stop data transmission on the first carrier and stop measurement on the first carrier before sending the first information or after sending the first information. In this implementation, the terminal device may not need to care about a response message returned by the network device. The network device may return the response message, or may not return the response message. If the network device feeds back second information, the second information may be considered as a response message of the first information. In a possible implementation, the second information may be feedback information of the first message, for example, a radio link control layer (radio link control layer, RLC) protocol acknowledgment (acknowledgement, ACK). After sending the first information, the terminal device does not know whether the network device successfully receives the first information. In this solution, the terminal device may determine, based on the second information, that the network device has learned that the first terminal device does not have the capability of performing communication based on the first carrier. In addition, if the terminal device determines that the network device does not successfully receive the first information, the terminal device may send the first information to the network device again. It can be learned that in this solution, reliability of receiving the first information by the network device can be further improved, and a case in which the network device schedules data on the first carrier because the network device does not successfully receive the first information can be avoided.

In another possible implementation, the network device returns second information after receiving the first information. For example, the terminal device receives the second information from the network device. The second information may indicate to stop data transmission on the first carrier. The terminal device stops data transmission on the first carrier based on the second information. In other words, the terminal device sends the first information to the network device to request to stop data transmission on the first carrier and stop measurement on the first carrier. The network device determines, by sending the second information, that the terminal device can stop data transmission on the first carrier and stop measurement on the first carrier, and then the terminal device stops data transmission on the first carrier and stops measurement on the first carrier based on the second information sent by the network device. In a possible implementation, the second information indicates that the network device stops data scheduling on the first carrier. For example, the second information is an SCell activation/deactivation media access control control element (media access control control element, MAC CE), and the second information indicates that the first carrier is deactivated. That the second information indicates that the first carrier is deactivated may include: indicating to stop data transmission on the first carrier and stop measurement on the first carrier.

In a possible implementation, the terminal device supports communication with a first communication system and a second communication system simultaneously. The configuration information is used to configure the first carrier for the first communication system. The first communication system is associated with a first user identity of the terminal device, and the second communication system is associated with a second user identity of the terminal device.

Because hardware resources used by the terminal device to communicate with the first communication system and the second communication system are shared, when the terminal device communicates with the first communication system and the second communication system simultaneously, the hardware resources of the terminal device occupied by the first communication system and the second communication system may conflict or collide, and a capability that can be currently supported by the terminal device in the first communication system is lower than a capability initially reported by the terminal device to the network device, or a capability of the terminal device that currently works in the first communication system is temporarily limited. This application is also applicable to this scenario. When determining that data transmission cannot be performed on the first carrier in this scenario, the terminal device may send the first information, to avoid a packet loss caused by data scheduling on the first carrier by the network device. In addition, in this scenario, the terminal device may not measure the first carrier.

In a possible implementation, the configuration information is measurement configuration information used to configure the first carrier, and the measurement configuration information indicates that a serving cell measurement object of the terminal device for the first carrier is configured. In this implementation, because the terminal device does not have the capability of performing communication based on the first carrier, after the terminal device receives the configuration information from the network device, the terminal device stops measurement on the first carrier, and the terminal device sends a measurement report to the network device. The measurement report does not include the measurement result of the first carrier; or information indicating the measurement result of the first carrier in the measurement report is a preset value.

Therefore, interruption of service data transmission caused by measurement on the first carrier by the terminal device can be avoided. Further, because the network device configures, by using the configuration information, the serving cell measurement object of the terminal device for the first carrier, and the terminal device does not measure the first carrier, the measurement report sent by the terminal device to the network device may not include the measurement result of the first carrier; or the information indicating the measurement result of the first carrier in the measurement report is the preset value. Therefore, because the terminal device does not measure the first carrier, the terminal device may use a hardware resource associated with the first carrier for transmission in another communication system, for example, transmission of a higher-priority service or a more important service that is being performed in the another communication system. In addition, this also complies with a configuration of the network device, and is more compatible with an existing procedure.

In a possible implementation, after the terminal device sends the first information to the network device, the terminal device sends third information to the network device, where the third information indicates that the terminal device has the capability of performing communication based on the first carrier, and the third information further indicates that the terminal device restores a capability of measuring the first carrier.

Therefore, the network device may determine, based on the third information, that the terminal device has the capability of performing communication based on the first carrier. Then, when a downlink service volume of the network device increases, the network device can activate more carriers or more carriers for scheduling data, to improve a downlink data transmission speed.

In a possible implementation, the terminal device may send the third information to the network device when restoring the capability of measuring the first carrier.

In another possible implementation, the terminal device sends the third information to the network device when the terminal device restores the capability of measuring the first carrier and signal quality of the first carrier is greater than a preset signal quality threshold. It can be learned that the terminal device sends the third information to the network device when determining that the signal quality of the first carrier is good. After restoring the capability of measuring the first carrier, the terminal device may not send the third information when the signal quality of the first carrier is poor (for example, the signal quality of the first carrier is not greater than the preset signal quality threshold). Therefore, a case in which the network device activates a carrier with poor actual signal quality can be avoided. Then, a bit error and/or a packet loss can be reduced, and a waste of radio resources and energy consumption overheads of the terminal device are reduced.

In another possible implementation, the terminal device sends the third information to the network device when the terminal device restores the capability of measuring the first carrier and a preset measurement reporting condition is met. There are a plurality of preset measurement reporting conditions. For example, if the network device configures the terminal device to periodically report the measurement result of the first carrier, the network device reports the measurement result of the first carrier to the network device at a moment that is configured by the network device for reporting the measurement result of the first carrier. For another example, if the network device configures the terminal device to report the measurement result of the first carrier when a preset event is met, the terminal device reports the measurement result of the first carrier to the network device when determining that the preset event is met. The terminal device sends the third information after restoring the capability of measuring the first carrier and when the preset measurement reporting condition is met. Therefore, the terminal device may further report the measurement result of the first carrier.

In a possible implementation, that the third information includes the measurement result of the first carrier may also be understood as that the third information is the measurement result of the first carrier.

It can be learned that in this implementation, the measurement result of the first carrier may indicate that the terminal device has the capability of performing communication based on the first carrier, and the terminal device restores the capability of measuring the first carrier. In other words, the measurement result of the first carrier may implicitly indicate content indicated by the third information. When receiving the measurement result of the first carrier, the network device may determine that the terminal device has the capability of performing communication based on the first carrier, and may manage the first carrier based on the measurement result of the first carrier. In this manner, signaling overheads for sending by the terminal device can be reduced. In addition, the network device may perform a corresponding carrier management operation based on the measurement result of the first carrier, so that problems such as a bit error, a packet loss, a waste of radio resources, and energy consumption overheads of the terminal device that are caused by mistakenly activating a carrier with poor signal quality by the network device can be reduced.

In another possible implementation, the third information and the measurement result of the first carrier may be two different pieces of information, and the two pieces of information may be carried in one message or two messages.

In a possible implementation, when the terminal device restores the capability of measuring the first carrier, the terminal device may send the measurement result of the first carrier to the network device after obtaining the measurement result of the first carrier. In this solution, the terminal device does not need to wait for the preset measurement reporting condition to be met. Instead, when restoring the capability of measuring the first carrier, the terminal device may send the measurement result of the first carrier to the network device after obtaining the measurement result of the first carrier. This can accelerate a speed at which the network device obtains the measurement result of the first carrier, so that the network device can manage the carrier more properly based on the measurement result of the first carrier.

In another possible implementation, the terminal device may send the measurement result of the first carrier to the network device when the terminal device restores the capability of measuring the first carrier and first duration is greater than a preset duration threshold. The first duration includes duration from a moment at which the terminal device does not have a data transmission capability on the first carrier to a moment at which the terminal device has the data transmission capability on the first carrier. When time is short, a moving distance of the terminal device is not large, and quality of a carrier does not change greatly. Therefore, when duration in which the first carrier is restricted does not exceed the first duration, the terminal device may not send the measurement result of the first carrier after the terminal device restores the capability of measuring the first carrier and obtains the measurement result of the first carrier. Therefore, a quantity of pieces of signaling can be reduced, and resources can be saved. The terminal device reports the measurement result of the first carrier when the preset measurement reporting condition is met. In this way, this can also be more compatible with the conventional technology.

In another possible implementation, the terminal device sends the measurement result of the first carrier to the network device when the preset measurement reporting condition is met. In this way, this can be more compatible with the conventional technology. In another possible implementation, the terminal device sends the measurement result of the first carrier to the network device when the terminal device restores the capability of measuring the first carrier and the preset measurement reporting condition is met. In this way, this can be more compatible with the conventional technology.

In a possible implementation, the third information further indicates one of the following content:
after the measurement result of the first carrier is received from the terminal device, data transmission on the first carrier is allowed;
when no measurement result reported by the terminal device based on a preset second event is received before a first moment, data transmission on the first carrier is allowed, where the first moment is a moment that is after preset second duration starting from a moment at which the network device receives the third information;
when the measurement result of the first carrier is received from the terminal device before a first moment, and the measurement result of the first carrier indicates that signal quality of the first carrier is greater than a preset signal quality threshold, data transmission on the first carrier is allowed; or
when the measurement result of the first carrier is received from the terminal device before a first moment, and the measurement result of the first carrier indicates that signal quality of the first carrier is greater than a preset signal quality threshold, after the first moment arrives, data transmission on the first carrier is allowed.

It can be learned from the foregoing content that, in this embodiment of this application, after a delay of a period of time after receiving the third information, the network device delivers a message used to activate the first carrier. In the period of time, the network device may wait for the terminal device to measure the first carrier, and wait for the terminal device to determine whether the measurement result of the first carrier needs to be reported. If the terminal device triggers an event A2 or an event A6 for a cell corresponding to the first carrier in the period of time, the network may release an SCell or change the SCell based on a measurement report, but does not activate the first carrier. This solution can reduce problems such as a bit error, a packet loss, a waste of radio resources, and energy consumption overheads of the terminal device that are caused by mistakenly activating a carrier with poor signal quality by the network device. In addition, if the terminal device determines that the signal quality of the first carrier is poor, the terminal device may ignore the message that is delivered by the network device and that is used to activate the first carrier, to reduce problems such as a bit error, a packet loss, a waste of radio resources, and energy consumption overheads of the terminal device that are caused by performing a carrier activation operation (including RF warming up or the like).

In a possible implementation, after the terminal device sends the third information to the network device and before the terminal device sends the measurement result of the first carrier to the network device, the terminal device receives, from the network device, information used to activate a first reference signal, the terminal device receives the first reference signal from the network device, and the terminal device measures the first carrier based on the first reference signal, to obtain the measurement result of the first carrier.

In a possible implementation, a time domain density (a periodicity) of the first reference signal may be greater than a time domain density of another reference signal that has been configured by the network and that is used for measurement, and/or a frequency domain density of the first reference signal may be greater than a frequency domain density of the another reference signal that is used for measurement. Therefore, when the terminal device restores the capability of performing communication based on the first carrier, the terminal device can more quickly obtain a reference signal resource that may be used to measure the first carrier, to measure the first carrier more quickly.

In a possible implementation, before the terminal device receives, from the network device, the information used to activate the preset first reference signal, the terminal device receives configuration information of the first reference signal from the network device.

Because the network device may configure the configuration information of the first reference signal in advance, the terminal may learn of the configuration information of the first reference signal in advance, for example, a time domain position and a frequency domain position. When the terminal device restores the capability of performing communication based on the first carrier, if the terminal device receives, from the network device, the information used to activate the first reference signal, the terminal device may determine a location of the first reference signal based on the configuration information, to measure the first carrier based on the first reference signal more quickly.

Because the network device may dynamically activate the first reference signal by using activation information of the first reference signal, the network device may send the first reference signal in a specific scenario (for example, in a scenario in which the terminal device stops carrier measurement due to a hardware resource conflict, and restores a measurement capability after the hardware resource is released), to ensure that the terminal device obtains the measurement result of the first carrier more quickly, and the network device does not need to send the first reference signal at other time. Therefore, a case in which the first reference signal occupies a radio resource unnecessarily to affect a data transmission rate can be avoided. After receiving the activation information of the first reference signal from the network device, the terminal device learns that the terminal device may start to perform measurement based on the first reference signal. UE does not need to obtain the first reference signal before receiving the information used to activate the first reference signal.

According to a **second aspect,** this application provides a communication method. The method may be performed by a terminal device or a chip, a unit, or a module in the terminal device, and an example in which the method is performed by the terminal device is used for description in this application. The method includes:
The terminal device receives configuration information from a network device, where the configuration information is used to configure a first carrier. The terminal device sends first information to the network device, where the first information indicates to stop data transmission on the first carrier. The terminal device sends, to the network device, information used to request to configure a first gap, where the first gap is used to measure the first carrier.

It can be learned from the foregoing content that, in this embodiment of this application, the terminal device may request the first gap from the network, to measure the first carrier in the first gap when measurement cannot be performed on the first carrier due to an insufficient hardware capability. In addition, the information used to request to configure the first gap may further implicitly indicate, to the network device, that the terminal device cannot measure the first carrier.

In a possible implementation, when the terminal device does not have a capability of performing communication based on the first carrier, the terminal device sends, to the network device, the information used to request to configure the first gap.

In a possible implementation, the information used to request to configure the first gap further indicates that the first gap is used to measure the first carrier. Therefore, the network device may learn of a function of the first gap, and the network device may also learn that the terminal device can measure the first carrier in the first gap provided by the network. If the network device receives no measurement result from the terminal device, the network device may determine that the terminal device does not send the measurement result because the measurement result of the first carrier does not meet a preset measurement reporting condition, but not because the terminal device cannot measure the first carrier. Therefore, the network device may perform carrier management more properly.

In a possible implementation, after the terminal device sends, to the network device, the information used to request to configure the first gap, the terminal device receives configuration information of the first gap from the network device, and the terminal device measures the first carrier in the first gap based on the configuration information of the first gap, to obtain the measurement result of the first carrier.

In a possible implementation, after the terminal device receives the configuration information of the first gap from the network device, the terminal device sends, to the network device, information indicating that the terminal device has no preference on a configuration of the first gap. Because the terminal device can perform communication based on the first carrier after restoring a capability of performing communication based on the first carrier, the terminal device may also measure the first carrier in time other than the first gap. Therefore, the terminal device does not need to request the first gap from the network to measure the first carrier. The terminal device sends, to the network device, the information indicating that the terminal device has no preference on the configuration of the first gap, so that the network device can cancel the configuration of the first gap, to reduce resource consumption and optimize service experience.

In a possible implementation, the information indicating that the terminal device has no preference on the configuration of the first gap includes UE assistance information. For example, the terminal device does not include the configuration of the first gap in the UE assistance information. Therefore, when the UE assistance information received by the network device from the terminal device does not include the configuration of the first gap, the network device may determine that the terminal device stops preference on the configuration of the first gap, and the network device may cancel the configuration of the first gap, to reduce resource consumption and optimize service experience. This solution can be more compatible with the conventional technology.

According to a **third aspect,** this application provides a communication method. The method may be performed by a network device or a chip, a unit, or a module in the network device, and an example in which the method is performed by the network device is used for description in this application. The method includes:
The network device sends configuration information to a terminal device, where the configuration information is used to configure a first carrier. The network device receives first information from the terminal device, where the first information indicates to stop data transmission on the first carrier, and the first information further indicates that the terminal device stops measurement on the first carrier.

In some scenarios, a capability of the terminal device may be temporarily limited. For example, because a plurality of communication systems share a hardware resource of the terminal device, the terminal device cannot perform data transmission on the first carrier configured by the network device. If the network device does not know that the terminal device cannot support the first carrier, the network device may continue to schedule data on the first carrier. As a result, the terminal device cannot correctly decode the data on the first carrier, which wastes carrier resources and greatly reduces user experience.

In this embodiment of this application, when the terminal device cannot receive or send data on the first carrier, the terminal device may notify the network device by using the first information, so that the network device can stop data scheduling on the first carrier, to reduce a bit error and/or a packet loss.

In addition, when the network device configures the first carrier for the terminal device, because the terminal device may indicate, to the network device by sending the first information, that the terminal device stops measurement on the first carrier, the network device can determine that a reason for receiving no measurement result of the first carrier from the terminal device is that a first terminal device does not measure the first carrier, rather than another reason (for example, signal quality of the first carrier does not meet a preset measurement reporting condition), and then the network device can activate a carrier more properly.

In a possible implementation, the terminal device notifies, by using the first information, the network device that the terminal device has stopped data transmission on the first carrier and stopped measurement on the first carrier. The terminal device may stop data transmission on the first carrier and stop measurement on the first carrier before sending the first information or after sending the first information. In this implementation, the terminal device may not need to care about a response message returned by the network device. The network device may return the response message, or may not return the response message. If the network device feeds back second information, the second information may be considered as a response message of the first information. In a possible implementation, the second information may be feedback information of the first message, for example, a radio link control layer (radio link control layer, RLC) protocol acknowledgment (acknowledgement, ACK). After sending the first information, the terminal device does not know whether the network device successfully receives the first information. In this solution, the terminal device may determine, based on the second information, that the network device has learned that the first terminal device does not have a capability of performing communication based on the first carrier. In addition, if the terminal device determines that the network device does not successfully receive the first information, the terminal device may send the first information to the network device again. It can be learned that in this solution, reliability of receiving the first information by the network device can be further improved, and a case in which the network device schedules data on the first carrier because the network device does not successfully receive the first information can be avoided.

In another possible implementation, the network device returns second information after receiving the first information. For example, the terminal device receives the second information from the network device. The second information may indicate to stop data transmission on the first carrier. The terminal device stops data transmission on the first carrier based on the second information. In other words, the terminal device sends the first information to the network device to request to stop data transmission on the first carrier and stop measurement on the first carrier. The network device determines, by sending the second information, that the terminal device can stop data transmission on the first carrier and stop measurement on the first carrier, and then the terminal device stops data transmission on the first carrier and stops measurement on the first carrier based on the second information sent by the network device. In a possible implementation, the second information indicates that the network device stops data scheduling on the first carrier. For example, the second information is an SCell activation/deactivation media access control control element (media access control control element, MAC CE), and the second information indicates that the first carrier is deactivated. That the second information indicates that the first carrier is deactivated may include: indicating to stop data transmission on the first carrier and stop measurement on the first carrier.

In a possible implementation, the configuration information is measurement configuration information used to configure the first carrier, and the measurement configuration information indicates the terminal device to measure the first carrier. After the network device sends the configuration information to the terminal device, the network device receives a measurement report from the terminal device. The measurement report does not include the measurement result of the first carrier; or information indicating the measurement result of the first carrier in the measurement report is a preset value.

In this implementation, because the terminal device does not have the capability of performing communication based on the first carrier, the terminal device stops sending and receiving data on the first carrier. Therefore, the terminal device stops radio resource management measurement on the first carrier. This can avoid interruption of service data transmission caused by measurement performed by the terminal device on the first carrier on which data transmission is not performed. Further, because the network device configures, by using the configuration information, that the terminal device needs to measure the first carrier, and the terminal device does not measure the first carrier, the measurement report sent by the terminal device to the network device may not include the measurement result of the first carrier; or the information indicating the measurement result of the first carrier in the measurement report is the preset value. Because the terminal device does not measure the first carrier, the terminal device may use a hardware resource associated with the first carrier for transmission in another communication system, for example, transmission of a higher-priority service or a more important service that is being performed in the another communication system. In addition, this also complies with a configuration of the network device, and is more compatible with an existing procedure.

In a possible implementation, after the network device receives the first information from the terminal device, the network device receives third information from the terminal device, where the third information indicates that the terminal device has the capability of performing communication based on the first carrier, and the third information further indicates that the terminal device restores a capability of measuring the first carrier. Therefore, the network device may determine, based on the third information, that the terminal device has the capability of performing communication based on the first carrier. Then, when a downlink service volume of the network device increases, the network device can activate more carriers or more carriers for scheduling data, to improve a downlink data transmission speed.

In a possible implementation, that the third information includes the measurement result of the first carrier may also be understood as that the third information is the measurement result of the first carrier. It can be learned that in this implementation, the measurement result of the first carrier may indicate that the terminal device has the capability of performing communication based on the first carrier, and the terminal device restores the capability of measuring the first carrier. In other words, the measurement result of the first carrier may implicitly indicate content indicated by the third information. When receiving the measurement result of the first carrier, the network device may determine that the terminal device has the capability of performing communication based on the first carrier, and may manage the first carrier based on the measurement result of the first carrier. In this manner, signaling overheads for sending by the terminal device can be reduced. In addition, the network device may perform a corresponding carrier management operation based on the measurement result of the first carrier, so that problems such as a bit error, a packet loss, a waste of radio resources, and energy consumption overheads of the terminal device that are caused by mistakenly activating a carrier with poor signal quality by the network device can be reduced.

In another possible implementation, the third information and the measurement result of the first carrier may be two different pieces of information, and the two pieces of information may be carried in one message or two messages. After the network device receives the first information from the terminal device, the network device receives the measurement result of the first carrier from the terminal device. Therefore, when receiving the measurement result of the first carrier, the network device may manage the first carrier based on the measurement result of the first carrier, to reduce problems such as a bit error, a packet loss, a waste of radio resources, and energy consumption overheads of the terminal device that are caused by mistakenly activating a carrier with poor signal quality by the network device.

In a possible implementation, after the network device receives the third information from the terminal device, the method further includes one of the following content:
after receiving the measurement result of the first carrier from the terminal device, the network device determines that the terminal device restores the capability of performing communication with the terminal device based on the first carrier;
when receiving, before a first moment, no measurement result reported by the terminal device based on a preset second event, the network device determines that the terminal device restores the capability of performing communication with the terminal device based on the first carrier, where the first moment is a moment that is after preset second duration starting from a moment at which the network device receives the third information;
when receiving the measurement result of the first carrier from the terminal device before a first moment, and the measurement result of the first carrier indicates that signal quality of the first carrier is greater than a preset signal quality threshold, the network device determines that the terminal device restores the capability of performing communication with the terminal device based on the first carrier; or
when receiving the measurement result of the first carrier from the terminal device before a first moment, and the measurement result of the first carrier indicates that signal quality of the first carrier is greater than a preset signal quality threshold, after the first moment arrives, the network device determines that the terminal device restores the capability of performing communication with the terminal device based on the first carrier.

It can be learned from the foregoing content that, in this embodiment of this application, after a delay of a period of time after receiving the third information, the network device delivers a message used to activate the first carrier. In the period of time, the network device may wait for the terminal device to measure the first carrier, and wait for the terminal device to determine whether the measurement result of the first carrier needs to be reported. If the terminal device triggers an event A2 or an event A6 for a cell corresponding to the first carrier in the period of time, the network may release an SCell or change the SCell based on a measurement report, but does not activate the first carrier. This solution can reduce problems such as a bit error, a packet loss, a waste of radio resources, and energy consumption overheads of the terminal device that are caused by mistakenly activating a carrier with poor signal quality by the network device. In addition, if the terminal device determines that the signal quality of the first carrier is poor, the terminal device may ignore the message that is delivered by the network device and that is used to activate the first carrier, to reduce problems such as a bit error, a packet loss, a waste of radio resources, and energy consumption overheads of the terminal device that are caused by performing a carrier activation operation (including RF warming up or the like).

In a possible implementation, after the network device receives the third information from the terminal device, the network device sends, to the terminal device, information used to activate a first reference signal, the network device sends the first reference signal to the terminal device, and the network device receives the measurement result of the first carrier from the terminal device, where the measurement result of the first carrier is obtained by measuring the first carrier based on the first reference signal.

In a possible implementation, a time domain density (a periodicity) of the first reference signal may be greater than a time domain density of another reference signal, and/or a frequency domain density of the first reference signal may be greater than a frequency domain density of the another reference signal. Therefore, when the terminal device restores the capability of performing communication based on the first carrier, the terminal device can more quickly obtain a reference signal resource that may be used to measure the first carrier, to measure the first carrier more quickly.

In a possible implementation, before the network device sends, to the terminal device, the information used to activate the first reference signal, the network device sends configuration information of the first reference signal to the terminal device. Because the network device may configure the configuration information of the first reference signal in advance, the terminal may learn of the configuration information of the first reference signal in advance, for example, a time domain position and a frequency domain position. When the terminal device restores the capability of performing communication based on the first carrier, if the terminal device receives, from the network device, the information used to activate the first reference signal, the terminal device may determine a location of the first reference signal based on the configuration information, to measure the first carrier based on the first reference signal more quickly.

Because the network device may dynamically activate the first reference signal by using activation information of the first reference signal, the network device may send the first reference signal in a specific scenario (for example, in a scenario in which the terminal device stops carrier measurement due to a hardware resource conflict, and restores the measurement capability after the hardware resource is released), to ensure that the terminal device obtains the measurement result of the first carrier more quickly, and the network device does not need to send the first reference signal at other time. Therefore, a case in which the first reference signal occupies a radio resource unnecessarily to affect a data transmission rate can be avoided. After receiving the activation information of the first reference signal from the network device, the terminal device learns that the terminal device may start to perform measurement based on the first reference signal. UE does not need to obtain the first reference signal before receiving the information used to activate the first reference signal.

According to a **fourth aspect,** this application provides a communication method. The method may be performed by a network device or a chip, a unit, or a module in the network device, and an example in which the method is performed by the network device is used for description in this application. The method includes:
The network device sends configuration information to a terminal device, where the configuration information is used to configure a first carrier. The network device receives first information from the terminal device, where the first information indicates to stop data transmission on the first carrier. The network device receives, from the terminal device, information used to request to configure a first gap, where the first gap is used to measure the first carrier.

It can be learned from the foregoing content that, in this embodiment of this application, the terminal device may request the first gap from the network, to measure the first carrier in the first gap when measurement cannot be performed on the first carrier due to an insufficient hardware capability. In addition, the information used to request to configure the first gap may further implicitly indicate, to the network device, that the terminal device cannot measure the first carrier.

In a possible implementation, the information used to request to configure the first gap further indicates that the first gap is used to measure the first carrier. Therefore, the network device may learn of a function of the first gap, and the network device may also learn that the terminal device has measured the first carrier. If the network device receives no measurement result from the terminal device, the network device may determine that the terminal device does not send the measurement result because the measurement result of the first carrier does not meet a preset measurement reporting condition, but not because the terminal device cannot measure the first carrier. Therefore, the network device may perform carrier management more properly.

In a possible implementation, after the network device receives, from the terminal device, the information used to request to configure the first gap, the network device receives, from the terminal device, information indicating that the terminal device has no preference on a configuration of the first gap. Because the terminal device can perform communication based on the first carrier after restoring the capability of performing communication based on the first carrier, the terminal device may also measure the first carrier in time other than the first gap. Therefore, the terminal device does not need to specifically request the first gap to measure the first carrier. The terminal device sends, to the network device, the information indicating that the terminal device has no preference on the configuration of the first gap, so that the network device can cancel the configuration of the first gap, to reduce resource consumption.

In a possible implementation, the information indicating that the terminal device has no preference on the configuration of the first gap includes UE assistance information. For example, the UE assistance information does not include the configuration of the first gap. Therefore, when the UE assistance information received by the network device from the terminal device does not include the configuration of the first gap, the network device may determine the information indicating that the terminal device has no preference on the configuration of the first gap, and the network device may cancel the configuration of the first gap, to reduce resource consumption. This solution can be more compatible with the conventional technology.

Corresponding to any communication method in the first aspect to the fourth aspect, this application further provides a communication apparatus. The communication apparatus may be any transmit end device or receive end device that performs data transmission in a wireless manner, for example, a communication chip, a terminal device, or a network device (for example, a base station). In a communication process, the transmit end device and the receive end device are relative. In some communication processes, the communication apparatus may be used as the foregoing network device or a communication chip that may be used in the network device. In some communication processes, the communication apparatus may be used as the foregoing terminal device or a communication chip that may be used in the terminal device.

According to a **fifth aspect,** a communication apparatus is provided. The communication apparatus is the foregoing network device or terminal device. The apparatus may include a communication unit and a processing unit, to perform any implementation of any communication method in the first aspect to the fourth aspect. The communication unit is configured to perform functions related to sending and receiving. Optionally, the communication unit includes a receiving unit and a sending unit. In a design, the communication apparatus is a communication chip, and the communication unit may be an input/output circuit or a port of the communication chip.

In another design, the communication unit may be a transmitter and a receiver, or the communication unit is a transmitter machine and a receiver machine.

Optionally, the communication apparatus further includes modules that may be configured to perform any implementation of any communication method in the first aspect to the fourth aspect.

According to a **sixth aspect,** a communication apparatus is provided. The communication apparatus is the foregoing first network element, terminal device (for example, a first terminal device), or access network device. The communication apparatus is the foregoing terminal device or network device. The communication apparatus includes a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any implementation of any communication method in the first aspect to the fourth aspect.

Optionally, there are one or more processors, and there are one or more memories.

Optionally, the memory may be integrated with the processor, or the memory and the processor may be separately disposed.

Optionally, the transceiver may include a transmitter machine (transmitter) and a receiver machine (receiver).

According to a **seventh aspect,** a communication apparatus is provided. The communication apparatus is the foregoing first network element, terminal device (for example, a first terminal device), or access network device. The apparatus may include a processor. The processor is coupled to a memory, and may be configured to perform the method according to any one of the first aspect to the fourth aspect and any one of the possible implementations of the first aspect to the fourth aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface. Optionally, the transceiver may be a transceiver circuit. Optionally, the input/output interface may be an input/output circuit.

In another implementation, the communication apparatus is a network device. When the communication apparatus is the network device, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an **eighth aspect,** a system is provided. The system includes the foregoing terminal device and network device.

According to a **ninth aspect,** a computer program product is provided. The computer program product includes: a computer program (may also be referred to as code or instructions). When the computer program code is run, a computer is enabled to perform the method according to any one of the possible implementations of the first aspect, or the computer is enabled to perform the method according to any one of the implementations of the first aspect to the fourth aspect.

According to a **tenth aspect,** a computer-readable storage medium is provided. The computer-readable medium stores a computer program (may also be referred to as code or instructions). When the computer program is run on a computer, the computer is enabled to perform the method according to any one of the possible implementations of the first aspect, or the computer is enabled to perform the method according to any one of the implementations of the first aspect to the fourth aspect.

According to an **eleventh aspect,** a chip system is provided. The chip system may include a processor. The processor is coupled to a memory, and may be configured to perform the method according to any one of the first aspect to the fourth aspect and any one of the possible implementations of any one of the first aspect to the fourth aspect. Optionally, the chip system further includes the memory. The memory is configured to store a computer program (may also be referred to as code or instructions). The processor is configured to invoke the computer program from the memory and run the computer program, so that a device on which the chip system is installed performs the method according to any one of the first aspect to the fourth aspect and the possible implementations of the first aspect to the fourth aspect.

According to a **twelfth aspect,** a processing apparatus is provided, including: an input circuit, an output circuit, and a processing circuit. The processing circuit is configured to: receive a signal through the input circuit, and transmit a signal through the output circuit, so that the method according to any one of the first aspect to the fourth aspect and the possible implementations of the first aspect to the fourth aspect is implemented.

In a specific implementation process, the processing apparatus may be a chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

### BRIEF DESCRIPTION OF DRAWINGS

FIG. 1A is a diagram of a network architecture to which an embodiment of this application is applicable;
FIG. 1B is a diagram of a network architecture to which an embodiment of this application is applicable;
FIG. 1C is a diagram of a network architecture to which an embodiment of this application is applicable;
FIG. 2A is a diagram of a possible scenario to which an embodiment of this application is applicable;
FIG. 2B is a diagram of a possible scenario to which an embodiment of this application is applicable;
FIG. 3 is a schematic flowchart of a communication method according to an embodiment of this application;
FIG. 4A is a schematic flowchart of a communication method according to an embodiment of this application;
FIG. 4B is a diagram of a resource conflict according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

A communication method provided in this application may be applied to various communication systems, for example, an internet of things (internet of things, IoT), a narrow band internet of things (narrow band internet of things, NB-IoT), long term evolution (long term evolution, LTE), a 5th generation (5th generation, 5G) communication system, an LTE and 5G hybrid architecture, and a 6th generation (6th generation, 6G) communication system or a new communication system emerging in future communication development. The 5G communication system in this application may include at least one of a non-standalone (non-standalone, NSA) 5G communication system and a standalone (standalone, SA) 5G communication system. Alternatively, the communication system may be a machine to machine (machine to machine, M2M) network, a machine type communication (machine type communication, MTC) network, or another network.

A communication system to which embodiments of this application are applicable may include a scheduling device and a scheduled device. The scheduling device may be, for example, a network device, for example, a base station, a core network, or an access point. The scheduling device may alternatively be a terminal device. For example, in device-to-device (device-to-device, D2D) communication, the scheduling device may alternatively be a terminal device. The scheduled device may be a terminal device, for example, a mobile terminal device, a fixed terminal device, a vehicle-mounted terminal device, or an internet of things terminal device. In embodiments of this application, an example in which the scheduling device is the network device and the scheduled device is the terminal device is used for description. In subsequent content in embodiments of this application, a solution on a network device side may also be applicable to the scheduling device, and a solution on a terminal device side may also be applicable to the scheduled device.

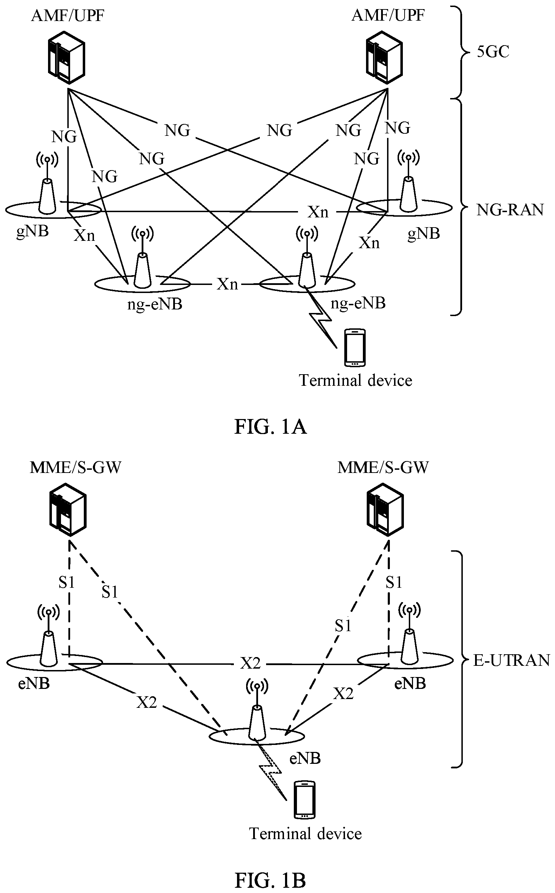

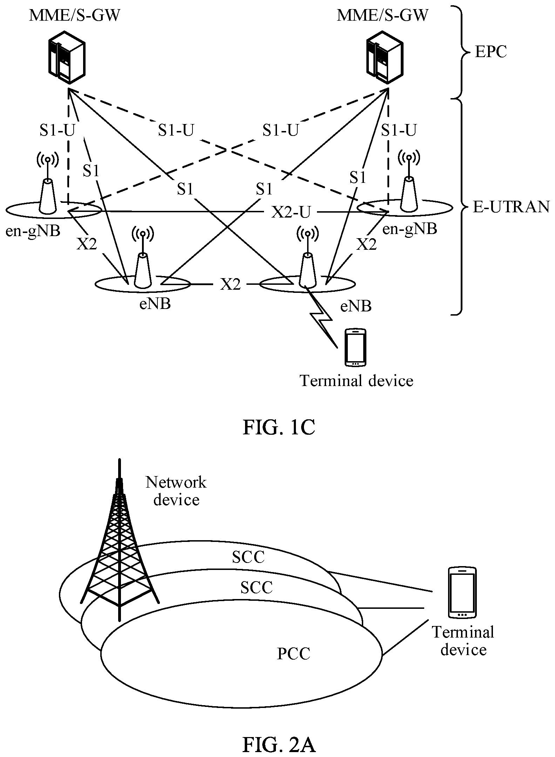

FIG. 1A, FIG. 1B, and FIG. 1C are several example diagrams of network architectures to which embodiments of this application are applicable. The following describes, with reference to the accompanying drawings, content provided in embodiments of this application.

In FIG. 1A, an example in which the communication system is a 5G communication system is used for description. As shown in FIG. 1A, the communication system includes a terminal device and a network device.

In embodiments of this application, the terminal device may be a device with a wireless transceiver function, and may also be referred to as user equipment (user equipment, UE), an access terminal, a subscriber unit, a subscriber station, a mobile station, a remote station, a remote terminal, a mobile device, a user terminal, a wireless communication device, a user agent, a user apparatus, or the like. In embodiments of this application, the terminal device may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), or the like.

In embodiments of this application, the network device may connect the terminal device to a radio access network (radio access network, RAN), and may be a radio access device in various standards. For example, the network device may be a next generation NodeB (next generation NodeB, gNB) in an NR system, may be an evolved NodeB (evolved NodeB, eNB), a radio network controller (radio network controller, RNC) or a NodeB (NodeB, NB), a base transceiver station (base transceiver station, BTS), a home NodeB (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, or a transmission point (transmission and reception point, TRP or transmission point, TP), may be a gNB or a transmission point (TRP or TP) in a 5G (NR) system, or one antenna panel or one group of antenna panels (including a plurality of antenna panels) of a base station in a 5G system, or may be a network node forming a gNB or a transmission point, for example, a baseband unit (BBU) or a DU in a central unit-distributed unit (central unit-distributed, CU-DU) architecture. In FIG. 1A, an example in which the network device is a gNB or an ng-eNB is used for description.

As shown in FIG. 1A, the network includes a 5G core (5G core, 5GC) network and a next generation radio access network (next generation radio access network, NG-RAN). The 5GC includes a plurality of core network devices, for example, an access and mobility management (access and mobility management function, AMF) network element and a user plane function (user plane function, UPF) network element. The NG-RAN includes a gNB, an ng-eNB, and the like. The gNB may provide an NR user plane and control plane protocol terminal for the terminal device. The ng-eNB provides an evolved universal terrestrial radio access (evolved universal terrestrial radio access, E-UTRA) user plane and control plane protocol terminal for the terminal device. The gNB and the ng-eNB are connected to each other through an Xn interface. The gNB and the ng-eNB may be connected to a core network device through an NG interface.

In **FIG. 1B****,** an example in which the communication system is an LTE communication system is used for description. For related content of a terminal device and a network device in FIG. 1B, refer to the related descriptions in FIG. 1A. In FIG. 1B, an example in which the network device is an eNB is used for description. As shown in FIG. 1B, the communication system includes an evolved universal mobile telecommunications system terrestrial radio access network (Evolved Universal Mobile Telecommunications System Terrestrial Radio Access Network, E-UTRAN). The E-UTRAN includes eNBs. The eNBs may be connected to each other through an X2 interface. The eNB may be connected to an MME/S-GW. The MME/S-GW may be connected to the eNB through an S1 interface.

In **FIG. 1C****,** an example in which the communication system is an EN-DC communication system is used for description. For related content of a terminal device and a network device in FIG. 1C, refer to the related descriptions in FIG. 1A. As shown in FIG. 1C, the network includes an evolved packet switching core (Evolved Packet Core, EPC) and an E-UTRAN. The EPC includes a plurality of devices, for example, an MME network element and an S-GW network element. The E-UTRAN includes eNBs and en-gNBs. The eNB and the en-gNB are connected to each other through an X2 interface, the eNBs are connected to each other through an X2 interface, and the en-gNBs are connected to each other through an X2-U interface. The en-gNB may be connected to a device in the EPC through an S1-U interface, and the eNB may be connected to a device in the EPC through an S1 interface.

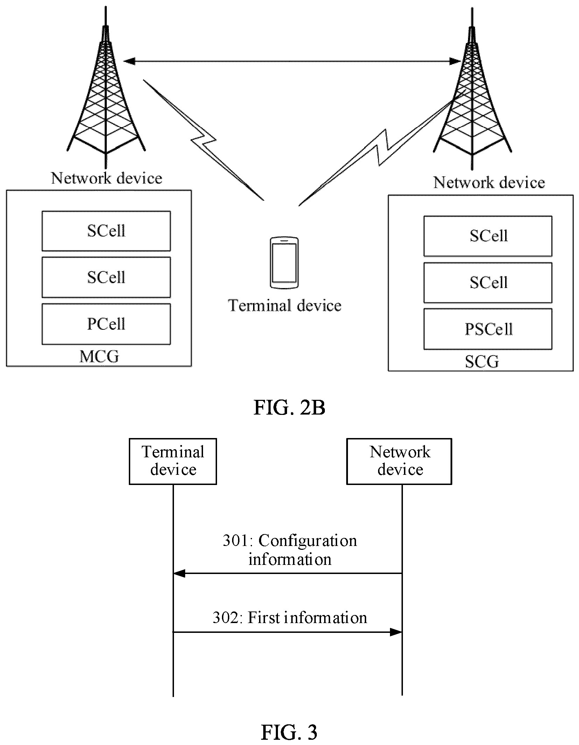

Embodiments of this application may be further applied to a multi-carrier transmission scenario, including but not limited to CA, supplementary uplink (supplementary uplink, SUL), supplementary downlink (supplementary downlink, SDL), and other scenarios. **FIG. 2A** **and** **FIG. 2B** show several example diagrams of possible scenarios to which embodiments of this application are applicable.

In **FIG. 2A****,** an example in which a scenario to which an embodiment of this application is applicable is a CA scenario is used for illustration. As shown in FIG. 2A, a network device may aggregate a plurality of component carriers (component carriers, CCs), and configure the plurality of component carriers for a terminal device to use, to increase a bandwidth and improve a data transmission rate. FIG. 2A shows a scenario in which three carriers are aggregated. The terminal device may simultaneously use the three carriers. In the three carriers, one carrier is referred to as a primary carrier component (primary carrier component, PCC), and a cell corresponding to the PCC is referred to as a primary cell (primary cell, PCell). The other two carriers are referred to as secondary carrier components (secondary carrier components, SCCs), and a cell corresponding to the SCC is referred to as a secondary cell (secondary cell, SCell).

In the conventional CA, one time division duplex (time division duplex, TDD) carrier (the carrier includes an uplink part and a downlink part) or one pair of frequency division duplex (frequency division duplex, FDD) carriers (one downlink carrier and one uplink carrier) corresponds to one cell. After the SUL is introduced, one FDD cell may correspond to one downlink carrier and two uplink carriers (a normal uplink/non-supplementary uplink (normal uplink/non-supplementary uplink, NUL) carrier and an SUL carrier), or one TDD cell may correspond to two carriers: one NUL carrier and one SUL carrier.

In addition, the component carrier (component carrier, CC) may also be referred to as a carrier component (carrier component, CC). For ease of description, the component carrier is collectively referred to as the carrier component or a carrier in embodiments of this application.

In **FIG. 2B****,** an example in which a scenario to which an embodiment of this application is applicable is a DC scenario is used for illustration. As shown in FIG. 2B, a terminal device establishes connections to two network devices (the network device herein is a logical network device) in a DC manner. One of the two network devices is a master node (master Node, MN), and the other network device is a secondary node (Secondary Node, SN). Both the MN and the SN may independently perform CA. Cells that associate with the MN and that are aggregated in CA form a master cell group (master cell group, MCG), and cells that associate with the SN and that are aggregated in CA form a secondary cell group (secondary cell group, SCG). If dual connectivity is not performed, a group of cells communicating with the terminal device is the MCG.

The MCG includes one primary cell PCell and at least one secondary cell (secondary cell, SCell). The SCG includes one primary secondary cell (primary secondary cell, PSCell) and at least one SCell. The PCell in the MCG and the SCell in the MCG are combined by using a carrier aggregation (carrier aggregation, CA) technology. The PSCell in the SCG and the SCell in the SCG are also combined by using the carrier aggregation technology.

Based on FIG. 1A, FIG. 1B, FIG. 1C, FIG. 2A, FIG. 2B, and other content, **FIG. 3** is a diagram of a communication method according to an embodiment of this application. In FIG. 3, interaction between a network device and a terminal device is used as an example for description. In this embodiment of this application, an operation performed by the network device may alternatively be performed by a chip or a module in the network device, and an operation performed by the terminal device may alternatively be performed by a chip or a module in the terminal device.

As shown in FIG. 3, the method includes the following steps.

**Step 301:** The network device sends configuration information to the terminal device.

Correspondingly, the terminal device receives the configuration information from the network device. The configuration information is used to configure a first carrier.

Before step 301, the terminal device may report a radio capability of the terminal device (UE radio capability, and referred to as a capability of the terminal device for short below) to the network device. For example, the terminal device reports the capability of the terminal device by using UE capability information (UECapabilityInformation), and the terminal device usually reports the capability of the terminal device to the network device after registering with a network. The network device may configure a carrier for the terminal device based on the capability of the terminal device.

The terminal device may report, in UECapabilityInformation, a band combination list (supportedBandCombinationList) supported by the terminal device, where the band combination list includes a band combination (BandCombination, BC) on which the terminal device supports carrier aggregation. For each band combination, the terminal device may report band-related information forming the band combination, for example, a number of a band and a carrier aggregation bandwidth class (CA-bandwidthClass) of the band. The carrier aggregation bandwidth class of the band indicates a maximum quantity of contiguous aggregated carriers, a maximum aggregation bandwidth, and the like that are supported by the band. For each band combination, the terminal device further reports a feature set combination corresponding to the band combination, a CA parameter of the band combination, and the like. Based on the capability of the terminal device reported by the terminal device, the network device may learn of a band on which the terminal device supports carrier aggregation, a quantity of carriers, a bandwidth, and a carrier aggregation manner.

In step 301, the network device may configure the carrier for the terminal device based on the capability of the terminal device. The first carrier is the carrier configured by the network device for the terminal device based on the capability of the terminal device. The capability of the terminal device reported by a first terminal device indicates that the terminal device supports communication with the network device based on the first carrier.

In this embodiment of this application, the first carrier (a carrier is short for a component carrier, and a component carrier is referred to as a component carrier) may be one or more carriers, which are referred to as the first carrier in this embodiment of this application for ease of description. The first carrier may be a supplementary uplink (supplementary uplink, SUL) carrier, a normal uplink (normal uplink/non-supplementary uplink, NUL) carrier, a supplementary downlink (supplementary downlink, SDL) carrier, or a normal downlink (normal downlink/non-supplementary downlink, NDL) carrier. The first carrier may alternatively be a first cell, and the first cell may be one or more cells or cell groups (cell groups, CGs). The first cell may be an FDD cell or a TDD cell. The first cell may be a primary cell PCell or a secondary cell SCell. The cell group may be a master cell group (master cell group, MCG) or a secondary cell group (secondary cell group, SCG). In a dual connectivity DC scenario, the secondary cell SCell may include an SCell in the MCG, a PSCell in the SCG, or an SCell in the SCG. That the network device configures the first carrier for the terminal device may also be understood as that the network device allows the terminal device to perform communication on the first carrier.

**Step 302:** The terminal device sends first information to the network device.

Correspondingly, the network device receives the first information from the terminal device. The first information indicates to stop data transmission on the first carrier, and the first information further indicates that the terminal device stops measurement on the first carrier.

Before step 302, the first carrier configured by the network device may be in an activated state, a deactivated state, or a dormant state.

In this embodiment of this application, that the first information indicates to stop data transmission on the first carrier (data transmission on the first carrier may include uplink data transmission and/or downlink data transmission on the first carrier) may also be understood as that the first information indicates one or more of the following content: The terminal device stops data transmission on the first carrier; the first information requests the network device to stop data transmission on the first carrier; the first information indicates the terminal device to stop, suspend, or temporarily limit a data transmission capability on the first carrier; the first information requests the network device to stop, suspend, or temporarily limit a data transmission capability on the first carrier; the first information requests the network device to stop, suspend, or temporarily limit data scheduling on the first carrier; or a hardware resource corresponding to the first carrier conflicts with a hardware resource corresponding to another communication system. That the first information further indicates that the terminal device stops measurement on the first carrier may also be understood as that the first information requests to stop measurement on the first carrier.

In this embodiment of this application, the terminal device stops measurement on the first carrier. The measurement may be understood as radio resource management (radio resource management, RRM) measurement, and includes measurement based on at least one of a channel state information reference signal (channel state information reference signal, CSI-RS) and/or a synchronization signal/physical broadcast channel block (synchronization signal/physical broadcast channel block, SSB). That the terminal device stops measurement on the first carrier may include at least one of the following content: The terminal device suspends measurement on the first carrier; the terminal device does not measure the first carrier; the terminal device does not measure a frequency at which the first carrier is located; or the terminal device does not report a measurement result of the first carrier.

In a possible implementation, the terminal device receives measurement configuration information from the network device. The measurement configuration information may be carried in the configuration information in step 301, or may not be carried in the configuration information in step 301. The measurement configuration information and the configuration information may be respectively sent by using two messages. The measurement configuration information indicates the terminal device to measure the first carrier (or may indicate the terminal device to measure the first carrier by indicating the terminal device to measure the frequency at which the first carrier is located). The measurement configuration information includes one or more of the following: a configuration of a measurement object (Measurement object, MO), a preset measurement reporting condition (may also be referred to as a measurement reporting configuration (measurement reporting configuration)), a configuration of a measurement identity (measurement identity), a configuration of a measurement gap (measurement gap), or the like. The preset measurement reporting condition includes a criterion for triggering the terminal device to send a measurement report (for example, periodic measurement reporting or event-triggered measurement reporting). For the periodic measurement reporting, a periodic reporting interval may be further configured in the preset measurement reporting condition. For the event-triggered measurement reporting, the preset measurement reporting condition may further include a configuration of a preset event (for example, one or more of an event A1, an event A2, an event A3, an event A4, an event A5, an event A6, an event B1, or an event B2, where the preset event may further include another event, and this is only an example herein). Configuration information of the preset event may include a signal quality threshold, a signal quality range, a hysteresis parameter, trigger time, and the like that correspond to the event.

An event definition of the event A2 includes: Signal quality of a serving cell is lower than a threshold. The event A2 may be used to remove an SCell in a CA scenario. When signal quality of the SCell meets the event A2, the network device (for example, a base station) may remove/release the SCell. An event definition of the event A6 includes: Signal quality of a neighboring cell is higher than that of the serving cell SCell by an offset. The event A6 may be used to change an SCell. When the event A6 is met, the network device (for example, the base station) may not change a PCell, and change the SCell by using an RRC reconfiguration message.

The terminal device stops measurement on the first carrier, and the terminal device sends a measurement report to the network device. Correspondingly, the network device receives the measurement report. The measurement report may not include the measurement result of the first carrier; or information indicating the measurement result of the first carrier in the measurement report is a preset value.

For example, the network device configures a serving cell measurement object (servingcellMO) for a serving cell (or the first cell) associated with the first carrier. In this case, the terminal device needs to include the measurement result of the first carrier in the measurement report. Because the terminal device has stopped measurement on the first carrier, the measurement report reported by the terminal device does not include the measurement result of the first carrier, or the measurement result of the first carrier in the measurement report is set to the preset value. The measurement report may be a periodically triggered measurement report or an event-triggered measurement report.

In this implementation, the terminal device does not have a capability of measuring the first cell. Therefore, because the network device configures, by using the configuration information, the serving cell measurement object of the terminal device for the first cell, and the terminal device does not measure the first cell, the measurement report sent by the terminal device to the network device may not include the measurement result of the first cell; or the information indicating the measurement result of the first cell in the measurement report is the preset value. Because the terminal device does not measure the first carrier, the terminal device may use a hardware resource associated with the first carrier for transmission in another communication system, for example, transmission of a higher-priority service or a more important service that is being performed in the another communication system. In addition, this also complies with a configuration of the network device, and is more compatible with an existing procedure.

In this embodiment of this application, the network device and the terminal device may communicate with each other through a plurality of carriers, or may communicate with each other through one carrier. The terminal device may further communicate with a plurality of network devices simultaneously. For example, the terminal device supports two SIM cards, the terminal device communicates with different network devices through the two SIM cards, and the two SIM cards share a hardware resource of the terminal device. The hardware resource includes resources such as a baseband resource and a radio frequency resource. The baseband resource includes a processor resource, a memory resource, and the like. The radio frequency resource includes an antenna, a radio frequency front end module (front end module, FEM), an RFIC channel, and the like.

In some scenarios, a capability that can be supported by the terminal device is lower than a capability initially reported by the terminal device to the network device, or a capability of the terminal device is temporarily limited in some scenarios. For example, because hardware resources used by the terminal device to communicate with a plurality of network devices in a plurality of communication systems are shared, when the terminal device simultaneously communicates with the plurality of communication systems, the hardware resources of the terminal device may conflict or collide. As a result, the terminal device determines that the terminal device cannot communicate with the network device based on one or more carriers configured by the network device for the terminal device. For example, the terminal device cannot communicate with the network device based on the first carrier. If a network does not know that the terminal device does not have a capability of supporting data transmission on the first carrier, the network device continues to schedule data on the first carrier. As a result, the terminal device cannot correctly decode the data on the first carrier, which wastes carrier resources, causes a bit error and/or a packet loss, and greatly reduces user experience.

In this embodiment of this application, when the network device configures the first carrier for the terminal device, because the terminal device may indicate, to the network device by sending the first information, to stop data transmission on the first carrier, when the terminal device cannot receive or send data on the first carrier, the terminal device may notify the network device by using the first information, so that the network device can stop data scheduling on the first carrier, to reduce a bit error and/or a packet loss.

In addition, when the network device configures the first carrier for the terminal device, because the terminal device may indicate, to the network device by sending the first information, that the terminal device stops measurement on the first carrier, the network device can determine that a reason for receiving no measurement result of the first carrier from the terminal device is that a first terminal device does not measure the first carrier, rather than another reason (for example, signal quality of the first carrier does not meet the preset measurement reporting condition), and then the network device can activate a carrier more properly.

For another example, the terminal device supports communication with a plurality of associated communication systems (for example, a communication system A and a communication system B) by using a plurality of user identities, and the communication with the plurality of communication systems shares a hardware capability of the terminal device. When hardware resources needed by the communication system A and the communication system B conflict, the terminal device may determine a communication system whose service is more important or has a higher priority, and then the terminal device may allocate a hardware resource to the high-priority service (for example, the terminal device allocates a hardware resource of the first carrier to the communication system A). Therefore, the terminal device does not have a capability of performing communication with a communication system (the communication system B) corresponding to a low-priority service based on the first carrier on which a resource conflict occurs.

In addition, if the network device configures measurement of the first carrier for the terminal device, and if the terminal device still needs to maintain measurement on the first carrier, in a period of time of measuring the first carrier, the terminal device allocates a hardware resource used for communication on another carrier to the first carrier for measurement. This causes interruption of a service (for example, a service of the communication system A and/or a service of the communication system B). However, because data transmission on the first carrier has been stopped, a necessity that the terminal device maintains measurement on the first carrier is low. In this embodiment of this application, the terminal device stops measurement on the first carrier, so that interruption of another service caused by measurement on the first carrier can be avoided.

In step 302, the terminal device may implicitly indicate that the terminal device stops measurement on the first carrier. For example, the terminal device may indicate, by using same information, to stop data transmission on the first carrier, and indicate that the terminal device stops measurement on the first carrier. The terminal device may alternatively explicitly indicate that the terminal device stops measurement on the first carrier. For example, information used by the terminal device to indicate to stop data transmission on the first carrier may be different from information indicating that the terminal device stops measurement on the first carrier. The following provides example descriptions by using a manner A1 and a manner A2.

**Manner A1:** The first information includes first indication information. The first indication information is information indicating to stop data transmission on the first carrier and indicating that the terminal device stops measurement on the first carrier.

In a possible implementation, the first indication information may be information indicating to restrict or suspend (suspend) the first carrier. In the manner A1, the information indicating to restrict or suspend the first carrier further indicates that the terminal device stops measurement on the first carrier. In this embodiment of this application, the first carrier being restricted may be referred to as the first carrier being in a restricted state. The first carrier being suspended may be referred to as the first carrier being in a suspended state. In the manner A1, the first carrier being in the restricted state or the suspended state may include that the first carrier stops being used for data transmission, and the terminal device stops measurement on the first carrier.

It can be learned that, in this implementation, the terminal device may clarify, to the network device, behavior of the terminal device when the first carrier is in the restricted state or the suspended state. For example, under a condition in which the capability of the terminal device is temporarily limited due to a reason such as dual-card hardware resource sharing, the terminal device cannot perform measurement on the first carrier that the terminal device requests to restrict or suspend, to ensure that the network device and the terminal device have a consistent understanding of the first carrier being in the restricted state or the suspended state.

In another possible implementation, the first indication information may be information indicating to deactivate the first carrier or restrict activation of the first carrier. Restricting activation may be understood as that the terminal device indicates the network device not to activate the first carrier. For example, before the terminal device sends the first information, the first carrier is not activated (for example, is in a deactivated state), but a hardware resource corresponding to the first carrier is occupied. The terminal device may indicate, by sending the first indication information, the network device not to activate the first carrier. For another example, before the terminal device sends the first information, the first carrier has been activated, but the hardware resource corresponding to the first carrier is occupied. The terminal device may indicate, by sending the first indication information, the network device to deactivate the first carrier. In the manner A1, the information indicating to deactivate the first carrier or restrict activation of the first carrier further indicates that the terminal device stops measurement on the first carrier. In this embodiment of this application, the first carrier being deactivated may be referred to as the first carrier being in a deactivated state. In the manner A1, the first carrier being in the deactivated state may include that the first carrier stops being used for data transmission, and the terminal device stops measurement on the first carrier.

In another possible implementation, the first indication information includes information indicating to deactivate the first carrier or restrict activation of the first carrier, and includes information indicating to deactivate the first carrier or restrict activation of the first carrier due to a hardware resource conflict. The hardware resource conflict may alternatively be "hardware resource sharing, dual-card hardware resource sharing, a dual-card reason, dual-card behavior, a dual-card purpose", or the like. In the manner A1, the information indicating to deactivate the first carrier or restrict activation of the first carrier due to the hardware resource conflict may further indicate that the terminal device stops measurement on the first carrier. In this example, the network device receives the first information, and if the first information indicates that the terminal device deactivates the first carrier or restricts activation of the first carrier due to the hardware resource conflict, the network device determines that the first carrier stops being used for data transmission, and the terminal device stops measurement on the first carrier.

In this embodiment of this application, after receiving the first information, the network device may further determine the following content, or it is understood as that the first information further indicates that the terminal device stops performing one or more of the following content on the first carrier: transmission of a sounding reference signal (sounding reference signal, SRS), reporting channel state information (channel state information, CSI), transmission on an uplink shared channel (upLink shared channel, UL-SCH), transmission on a random access channel (random access channel, RACH), transmission on a physical uplink control channel (physical uplink control channel, PUCCH), monitoring a physical downlink control channel (physical downlink control channel), or monitoring a physical downlink control channel used for the first carrier. Therefore, the terminal device may use the hardware resource associated with the first carrier for transmission in another communication system, for example, transmission of a higher-priority service or a more important service that is being performed in the another communication system.

In this embodiment of this application, a message that carries the first information may be a media access control (media access control, MAC) layer message, for example, a media access control control element (media access control control element, MAC CE), or may be a radio resource control (radio resource control, RRC) message, for example, UE assistance information (UE assistance information, UAI). The first information may be sent to the network device in an RRC resume request (RRC resume request) message, an RRC resume complete (RRC resume complete) message, an RRC re-establishment request (RRC re-establishment request) message, or an RRC re-establishment uncomplete (RRC re-establishment complete) message. When the message that carries the first information is the MAC CE, the network device can be indicated more quickly to suspend, restrict, or deactivate a carrier or restrict activation of the carrier, and a delay is lower. Therefore, the network can be notified more quickly to stop data scheduling on the first carrier, to avoid a bit error and/or a packet loss.

For example, the message that carries the first information is the MAC CE. A bit in the MAC CE may correspond to a carrier configured by the network. A bit value of the bit indicates whether to suspend, restrict, or deactivate the carrier corresponding to the bit or restrict activation of the carrier corresponding to the bit. For example, when a value of a bit in the MAC CE is 1 (may be considered as the first indication information), it indicates to suspend, restrict, or deactivate the carrier corresponding to the bit or restrict activation of the carrier corresponding to the bit. Correspondingly, when a value of a bit is 0, it indicates that a carrier corresponding to the bit can be activated, or restriction of the carrier corresponding to the bit can be canceled.

For another example, the message that carries the first information is the RRC message, for example, the UE assistance information. Optionally, UE includes an identifier of the first carrier or the first cell in the RRC message, for example, a serving cell index (serving cell index) of the first cell or a serving cell index of a cell associated with the first carrier, and the RRC message indicates to suspend, restrict, or deactivate the first cell or the first carrier or restrict activation of the first cell or the first carrier. For example, the RRC message includes a first list (specifically, the first list may be an information element (information element, IE) of a sequence (sequence) type). When the first list includes an identifier (may be considered as the first indication information) of the first carrier, it indicates to suspend, restrict, or deactivate the first carrier or restrict activation of the first carrier. When the RRC message does not include the identifier of the first carrier or the first list is empty, it indicates that the first carrier can be activated or restriction of the first carrier can be canceled, or indicates that the message that carries the first information is invalid.

For another example, the RRC message includes a bitmap (bitmap), and one or more bits in the bitmap (bitmap) correspond to one carrier. For example, a 1^{st} bit corresponds to a cell whose index is 1, a 2^{nd} bit corresponds to a cell whose index is 2, and so on. When a value of a bit is 1 (may be considered as the first indication information), it indicates to suspend, restrict, or deactivate a carrier corresponding to the bit or restrict activation of the carrier corresponding to the bit. When a value of a bit is 0, it indicates that a carrier corresponding to the bit can be activated or restriction of the carrier corresponding to the bit can be canceled.

**Manner A2:** The first information includes second indication information and third indication information.

The second indication information is information indicating to suspend, restrict, or deactivate the first carrier or restrict activation of the first carrier. The third indication information is information indicating that the terminal device stops measurement on the first carrier. In the manner A2, the second indication information and the third indication information are different information.

In the manner A2, the first carrier being in a deactivated state, a restricted state, or a suspended state may include that the first carrier stops being used for data transmission, and may not include that the terminal device stops measurement on the first carrier.

In the implementation A2, in this solution, for a manner of including the second indication information in a message that carries the first information, refer to the related solution of the first indication information in the foregoing implementation A1. The message that carries the first information may carry the third indication information by using another one or more bits. The third indication information may also be understood as that measurement on the carrier indicated by the second indication information to suspend, restrict, or deactivate or the carrier on which activation is indicated to restrict is stopped by the terminal device.

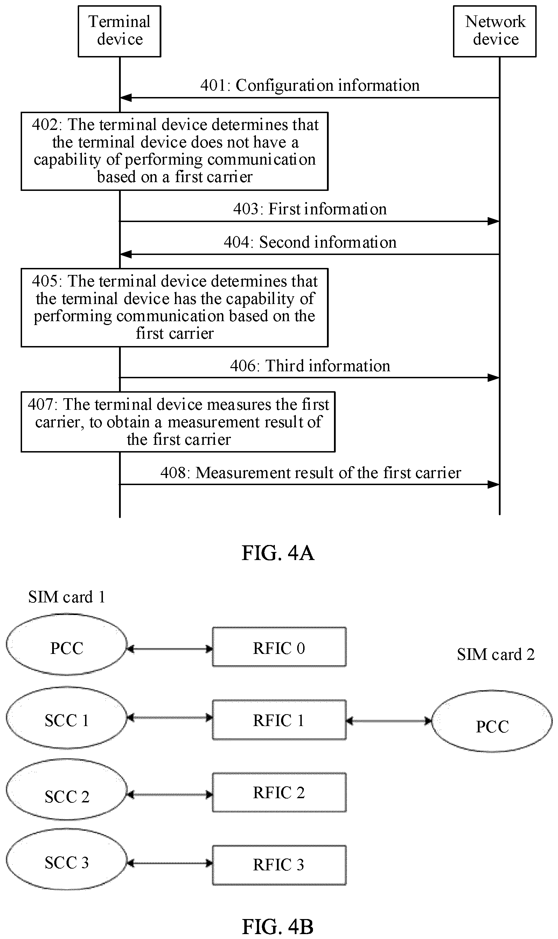

Based on embodiments shown in FIG. 1A, FIG. 1B, FIG. 1C, FIG. 2A, FIG. 2B, and FIG. 3, and other content, **FIG. 4A** is an example diagram of a communication method according to an embodiment of this application. FIG. 4A may be considered as an extended embodiment of the embodiment shown in FIG. 3. Descriptions about an entity for executing the method in FIG. 4A is similar to the descriptions about the entity for executing the method in FIG. 3. Details are not described again.

As shown in FIG. 4A, the method includes the following steps.

**Step 401:** A network device sends configuration information to a terminal device.

Correspondingly, the terminal device receives the configuration information from the network device.

For related descriptions of step 401, refer to the related descriptions of step 301.

**Step 402:** The terminal device determines that the terminal device does not have a capability of performing communication based on a first carrier.

That the terminal device determines that the terminal device does not have the capability of performing communication based on the first carrier may be understood as that the terminal device cannot receive a downlink and/or send an uplink on the first carrier, including at least one of downlink and/or uplink scheduling information, downlink and/or uplink service data, downlink and/or uplink signaling, a downlink message and/or an uplink message, a downlink feedback and/or an uplink feedback, and a downlink reference signal and/or an uplink reference signal; or the terminal device cannot support an activated state of the first carrier.

In step 402, in some scenarios, a capability that can be currently supported by the terminal device in a first communication system is lower than a capability initially reported by the terminal device to the network device, or a capability of the terminal device that currently works in the first communication system is temporarily limited. For example, the capability reported by the terminal device to the network device indicates that the terminal device supports communication with the network device based on the first carrier. During actual application, the terminal device determines that the terminal device cannot communicate with the network device based on the first carrier.

For example, a CA capability that can be supported by the terminal device is lower than a CA capability reported by the terminal device to the network device. For example, if the terminal device is a terminal device of a multi-universal subscriber identity module (Multi-Universal Subscriber Identity Module, MUSIM), for example, a terminal device that supports two subscriber identity modules (subscriber identity modules, SIMs), the terminal device supports communication with the first communication system and a second communication system simultaneously, where the first communication system is associated with a first subscriber identity module (corresponding to a first user identity, and may also be referred to as a SIM card 1 or a card 1 for short in this application), and the second communication system is associated with a second subscriber identity module (corresponding to a second user identity, and may also be referred to as a SIM card 2 or a card 2 for short in this application). The terminal device that supports two SIM cards may be referred to as a "dual-card terminal device" for short, and two SIM cards are referred to as "two cards" for short.

The simultaneous communication includes: working in the first communication system and the second communication system simultaneously, maintaining an RRC connection with the first communication system and the second communication system simultaneously, or performing data transmission with the first communication system and the second communication system simultaneously. Because hardware resources used by the terminal device to communicate with the first communication system and the second communication system are shared, when the terminal device communicates with the first communication system and the second communication system simultaneously, hardware resources of the terminal device occupied by the first communication system and the second communication system may conflict or collide. The hardware resource includes resources such as a baseband resource and a radio frequency resource. The baseband resource includes a processor resource, a memory resource, and the like. The radio frequency resource includes an antenna, a radio frequency front-end module (front end module, FEM), a radio frequency integrated circuit (radio frequency integrated circuit, RFIC) channel, and the like. In this embodiment of this application, that the terminal device does not have the capability of performing communication based on the first carrier may include that a hardware resource of the first carrier is in a resource conflict state, or is about to enter a resource conflict. In an embodiment, whether the hardware resource is in the resource conflict state may be a determining process. For example, the terminal device determines, based on resource configuration information, based on carrier configuration information, or based on scheduling information of the network device, that the hardware resource is in the resource conflict state, or directly determines, based on the configuration information, to send first information to the network device.

In a possible scenario, when the terminal device works only in the first communication system, the terminal device supports configuration and activation of the first carrier, and the terminal device can receive and send data on the first carrier. When the terminal device works in the second communication system, and when transmission/working in the second communication system occupies a part of the capability of the terminal device, the terminal device may not be capable of receiving and sending signaling or data on the first carrier configured in the first communication system. The part of the capability of the terminal device may include a hardware capability, for example, a baseband processing capability and/or a radio frequency capability, of the terminal device. The hardware capability of the terminal device may also be understood as a hardware resource, for example, a baseband resource and/or a radio frequency resource, of the terminal device. It may also be understood as that hardware resources of the terminal device occupied by carriers activated by network devices in the first communication system and in the second communication system conflict. In this case, the terminal device cannot normally receive and send data or signaling on the first carrier, and the CA capability of the terminal device in the first communication system is temporarily limited.

For another example, the terminal device may alternatively be another device that supports communication with associated communication systems by using a plurality of user identities, and the communication with the plurality of communication systems shares the hardware capability of the terminal device. For example, for a device that supports unicast communication and broadcast/multicast communication, the terminal device performs unicast communication with the first communication system, and the terminal device performs broadcast/multicast communication with the second communication system. The first communication system is associated with a first user identity of the terminal device, and the second communication system is associated with a second user identity of the terminal device. The capability reported by the terminal device in the first communication system can support configuration and activation of the first carrier when the terminal device works only in the first communication system. When transmission/working of the terminal device in the second communication system occupies a part of the capability of the terminal device, the terminal device may not be capable of receiving and sending signaling or data on the first carrier of the first communication system, and the CA capability of the terminal device in the first communication system is temporarily limited.

Further, the terminal device that supports two SIM cards is used as an example. For the network device, the terminal device that supports the two SIM cards is considered as two independent terminal devices. The two SIM cards may belong to a same operator or different operators. However, for a terminal device side, the two SIM cards actually share the hardware resource. When the SIM card 1 and the SIM card 2 perform communication simultaneously, carrier resources occupied by the SIM card 1 and the SIM card 2 may conflict, for example, radio frequency resources associated with carriers conflict. FIG. 4B shows an example of a resource conflict according to an embodiment of this application. As shown in FIG. 4B, a radio frequency resource of the terminal device includes four radio frequency integrated circuits (radio frequency integrated circuits, RFICs). In a network corresponding to the SIM card 1, four configured carrier components (carrier components, CCs) include a PCC and an SCC 1 to an SCC 3. The PCC is associated with an RFIC 0, the SCC 1 is associated with an RFIC 1, the SCC 2 is associated with an RFIC 2, and the SCC 3 is associated with an RFIC 3. In a network corresponding to the SIM card 2, one configured CC is a PCC, and the PCC is associated with the RFIC 1. Because the RFIC 1 is simultaneously associated with the two CCs, but the RFIC 1 can provide a service for only one of the CCs at a same moment, a radio frequency conflict occurs between the two CCs. When the network simultaneously schedules data on the two CCs, the terminal device can receive the data only on one of the CCs, and a bit error occurs during reception on the other CC, which greatly affects user experience.

Further, in a scenario in which a plurality of communication systems supported by a terminal share a hardware resource, a similar resource conflict problem also occurs. For example, UE simultaneously supports communication of at least two of the following communication systems: enhanced mobile broadband (enhanced mobile broadband, eMBB), vehicle to everything (vehicle to everything, V2X) communication, non-public network (non-public network, NPN) communication, multicast broadcast service (multicast broadcast service, MBS) communication, and the like.

**Step 403:** The terminal device sends the first information to the network device.

Correspondingly, the network device receives the first information from the terminal device.

For related descriptions of step 403, refer to the related descriptions of step 302.

**Step 404:** The network device sends second information to the terminal device.

Correspondingly, the terminal device receives the second information from the network device.

The second information indicates to stop data transmission on the first carrier. In a possible implementation, the second information further indicates the terminal device to stop measurement on the first carrier. Step 404 is an optional step. When determining that the terminal device does not have the capability of performing communication based on the first carrier, the terminal device may stop measurement on the first carrier, or may determine, after receiving the second information, to stop measurement on the first carrier.

In a possible implementation, the terminal device notifies, by using the first information, the network device that the terminal device has stopped data transmission on the first carrier and stopped measurement on the first carrier. The terminal device may stop data transmission on the first carrier and stop measurement on the first carrier before sending the first information or after sending the first information. In this implementation, the terminal device may not need to care about a response message returned by the network device. The network device may return the response message, or may not return the response message. If the network device feeds back the second information, the second information may be considered as a response message of the first information. In a possible implementation, the second information may be feedback information of the first message, for example, a radio link control layer (radio link control layer, RLC) protocol acknowledgment (acknowledgement, ACK) or a hybrid automatic repeat request acknowledge (hybrid automatic repeat request acknowledge, HARQ ACK). After sending the first information, the terminal device does not know whether the network device successfully receives the first information. In this solution, the terminal device may determine, based on the second information, that the network device has learned that a first terminal device does not have the capability of performing communication based on the first carrier. In addition, if the terminal device determines that the network device does not successfully receive the first information, the terminal device may send the first information to the network device again. It can be learned that in this solution, reliability of receiving the first information by the network device can be further improved, and a case in which the network device schedules data on the first carrier because the network device does not successfully receive the first information can be avoided.

In another possible implementation, the network device returns the second information after receiving the first information. For example, the terminal device receives the second information from the network device. The second information may indicate to stop data transmission on the first carrier. The terminal device stops data transmission on the first carrier based on the second information. In other words, the terminal device sends the first information to the network device to request to stop data transmission on the first carrier and stop measurement on the first carrier. The network device determines, by sending the second information, that the terminal device can stop data transmission on the first carrier and stop measurement on the first carrier, and then the terminal device stops data transmission on the first carrier and stops measurement on the first carrier based on the second information sent by the network device. In a possible implementation, the second information indicates that the network device stops data scheduling on the first carrier. For example, the second information is an SCell activation/deactivation media access control control element (media access control control element, MAC CE), and the second information indicates that the first carrier is deactivated. That the second information indicates that the first carrier is deactivated may include: indicating to stop data transmission on the first carrier and stop measurement on the first carrier.

**Step 405:** The terminal device determines that the terminal device has the capability of performing communication based on the first carrier.

That the terminal device determines that the terminal device has the capability of performing communication based on the first carrier may be understood as that a current capability of the terminal device supports receiving of a downlink and/or sending of an uplink on the first carrier, including at least one of downlink and/or uplink scheduling information, downlink and/or uplink service data, downlink and/or uplink signaling, a downlink message and/or an uplink message, a downlink feedback and/or an uplink feedback, and a downlink reference signal and/or an uplink reference signal; or the terminal device can support an activated state of the first carrier.

In step 405, there may be a plurality of scenarios in which the terminal device determines that the terminal device has the capability of performing communication based on the first carrier. With reference to the example in step 402, an example is provided. For example, the terminal device restores the capabilities of receiving and sending signaling or data and performing measurement on the first carrier of the first communication system due to the following reasons: The terminal device stops working/transmission in the second communication system; the terminal device leaves an RRC connected state in the second communication system; a configuration of the network device for the terminal device in the second communication system changes, to reduce a hardware resource that needs to be occupied for communication with the second communication system, and therefore the capability of the terminal device that can be used in the first communication system can support communication on the first carrier; or when determining that hardware resources used by the first communication system and the second communication system conflict, the terminal device preferentially allocates the resource to the first communication system for communication.

**Step 406:** The terminal device sends third information to the network device.

Correspondingly, the network device receives the third information from the terminal device.

The third information indicates that the terminal device has the capability of performing communication based on the first carrier, and the third information further indicates that the terminal device restores a capability of measuring the first carrier. Therefore, the network device may determine, based on the third information, that the terminal device has the capability of performing communication based on the first carrier. Then, when a downlink service volume of the network device increases, the network device can activate more carriers or more carriers for scheduling data, to improve a downlink data transmission speed.

In a possible implementation, after determining, in step 405, that the terminal device has the capability of performing communication based on the first carrier, the terminal device may measure the first carrier, for example, measure the first carrier based on measurement configuration information that is of the first carrier and that is configured by the network device.

The terminal device may implicitly or explicitly indicate that the terminal device restores the capability of measuring the first carrier. For example, the third information includes information indicating that the terminal device has the capability of performing communication based on the first carrier, and the information indicating that the terminal device has the capability of performing communication based on the first carrier further indicates that the terminal device restores the capability of measuring the first carrier. This may also be understood as that the information indicating that the terminal device has the capability of performing communication based on the first carrier and information indicating that the terminal device restores the capability of measuring the first carrier are the same information. In another possible implementation, in the third information, the information indicating that the terminal device has the capability of performing communication based on the first carrier is different from information indicating that the terminal device restores the capability of measuring the first carrier.

In this embodiment of this application, that the third information indicates that the terminal device has the capability of performing communication based on the first carrier may also be understood as that the third information indicates one or more of the following content: restriction of the first carrier is canceled; suspension of the first carrier is canceled; a state of restricting activation of the first carrier is canceled; the network device may activate the first carrier; the network device may schedule a resource and data on the first carrier; the terminal device restores a data transmission capability on the first carrier; indicating and/or requesting that the network device cancels a temporary limitation on the first carrier; a hardware resource conflict of the terminal device is canceled; or the first information is invalid.

For example, when the terminal device is a terminal device that supports communication with the first communication system and the second communication system simultaneously, the first communication system is associated with the first user identity of the terminal device, the second communication system is associated with the second user identity of the terminal device, and the capability of the terminal device that may be used for the first communication system supports communication on the first carrier. In this case, it may be referred to that the terminal device is no longer in a resource conflict state. That the capability of the terminal device that may be used for the first communication system supports communication on the first carrier may be understood as that the terminal device supports receiving of a downlink and/or sending of an uplink on the first carrier, including at least one of downlink and/or uplink scheduling information, downlink and/or uplink service data, downlink and/or uplink signaling, a downlink message and/or an uplink message, a downlink feedback and/or an uplink feedback, and a downlink reference signal and/or an uplink reference signal; or the terminal device supports an activated state of the first carrier. That the terminal device is no longer in the resource conflict state may be understood as that a resource conflict between the hardware resource used by the terminal in the first communication system and the hardware resource used by the terminal in the second communication system is stopped.

A message that carries the third information may be a MAC layer message, for example, a MAC CE, or may be an RRC message, for example, UE assistance information (UE assistance information, UAI). The message that carries the third information and the message that carries the first information may alternatively be a same message. For related content, refer to the foregoing descriptions of the first information. Details are not described again.

**Step 407:** The terminal device measures the first carrier, to obtain a measurement result of the first carrier.

In step 407, in a possible implementation, after the terminal device has the capability of performing communication based on the first carrier, which may also be understood as that the terminal device restores the capability of measuring the first carrier, the terminal device may measure the first carrier based on a measurement resource (including a synchronization signal block (synchronization signal block, SSB) resource or a CSI-RS resource), to obtain the measurement result of the first carrier. The measurement result of the first carrier may be obtained by measuring an available measurement resource once, or may be a plurality of measurement results (or an average value of the plurality of measurement results) obtained by measuring an available measurement resource for a plurality of times within a period of time. A measurement resource used by the terminal device to measure the first carrier may be a measurement resource that is first received from the network device after the terminal device restores the capability of performing communication based on the first carrier.

In step 407, the measurement performed by the terminal device on the carrier may include at least one of intra-frequency measurement, inter-frequency measurement, and inter-RAT measurement. The measurement performed by the terminal device on the carrier includes at least one of periodic measurement configured by the network, event-triggered measurement, cell global identifier (cell global identifier, CGI) measurement, and system frame number and frame timing difference (system frame number and frame timing difference, SFTD) measurement. The measurement performed by the terminal device on the carrier may include at least one of SSB-based measurement or CSI-RS-based RRM measurement. The measurement result of the first carrier may be understood as a cell-level measurement result. For example, the measurement configuration information of the network device indicates that the terminal device measures one or more beams of a cell, and performs averaging processing on an obtained result (for example, a power value), to obtain a measurement result of the cell (may be considered as the measurement result of the first carrier). The measurement result of the first carrier may include at least one of RSRP, RSRQ, or an SINR.

**Step 408:** The terminal device sends the measurement result of the first carrier to the network device.

Correspondingly, the network device receives the measurement result of the first carrier from the terminal device.

In a possible implementation, the terminal device sends the measurement result of the first carrier to the network device when a second condition is met. The second condition includes at least one of the following: the terminal device restores the capability of measuring the first carrier or a preset measurement reporting condition.

In a possible implementation, when the terminal device restores the capability of measuring the first carrier, the terminal device may send the measurement result of the first carrier to the network device after obtaining the measurement result of the first carrier. In this solution, the terminal device does not need to wait for the preset measurement reporting condition to be met (the preset measurement reporting condition may not be met). Instead, when restoring the capability of measuring the first carrier, the terminal device may send the measurement result of the first carrier to the network device when obtaining the measurement result of the first carrier. This can accelerate a speed at which the network device obtains the measurement result of the first carrier, so that the network device can manage the carrier more properly based on the measurement result of the first carrier.

In another possible implementation, the terminal device sends the measurement result of the first carrier to the network device when the preset measurement reporting condition is met. In another possible implementation, the terminal device sends the measurement result of the first carrier to the network device when the terminal device restores the capability of measuring the first carrier and the preset measurement reporting condition is met. In this way, this can be more compatible with the conventional technology.

The condition that the terminal device restores the capability of measuring the first carrier may alternatively be the following: The terminal device determines that the terminal device restores the capability of performing communication based on the first carrier, the terminal device cancels restriction of the first carrier, or the like. In this implementation, when the terminal determines that the terminal device restores the capability of measuring the first carrier, a case in which the terminal device reports the measurement result of the first carrier may be triggered.

There are a plurality of preset measurement reporting conditions. For example, if the network device configures the terminal device to periodically report the measurement result of the first carrier, the network device reports the measurement result of the first carrier to the network device at a moment that is configured by the network device for reporting the measurement result of the first carrier. For another example, if the network device configures the terminal device to report the measurement result of the first carrier when a preset event is met, the terminal device reports the measurement result of the first carrier to the network device when determining that the preset event is met.

In this embodiment of this application, the preset event may include, for example, one or more of an event A1, an event A2, an event A3, an event A4, an event A5, an event A6, an event B1, or an event B2. The preset event may further include a preset measurement reporting event. For example, a serving cell measurement object (serving cell measurement object) is configured for the first carrier or the first cell. When a measurement result of another carrier/cell/frequency meets a measurement reporting condition triggered by the preset event, a measurement report sent by the terminal device to the network device also includes the measurement result of the first carrier/first cell.

In another possible implementation, if the terminal device determines that the second condition is not met, the terminal device does not send the measurement result of the first carrier to the network device. For example, when the terminal device determines that the terminal device does not restore the capability of measuring the first carrier, because the terminal device cannot measure the first carrier, the terminal device does not send the measurement result of the first carrier to the network device. For another example, when determining that the terminal device restores the capability of measuring the first carrier but the preset measurement reporting condition is not met, the terminal device does not send the measurement result of the first carrier to the network device. This solution can be more compatible with the conventional technology.

In another possible implementation, after receiving the first information and before receiving the measurement result of the first carrier, the network device does not activate the first carrier. This may also be understood as follows: Before the terminal device reports the measurement result of the first carrier, the terminal device does not expect the network device to activate the first carrier; or before the network device obtains the measurement result of the first carrier, the terminal device does not expect the network device to activate the first carrier.

In another possible implementation, the network device may indicate a trigger condition for the terminal device to report the measurement result of the first carrier. For example, the trigger condition indicated by the network device includes: The terminal device restores the capability of measuring the first carrier. Indication information may be sent to the terminal device by using an RRC reconfiguration message.

In another possible implementation, the terminal device may send the measurement result of the first carrier to the network device when the terminal device restores the capability of measuring the first carrier and first duration is greater than a preset duration threshold. The first duration includes duration from a moment at which the terminal device does not have a data transmission capability on the first carrier to a moment at which the terminal device has the data transmission capability on the first carrier. When time is short, a moving distance of the terminal device is not large, and quality of a carrier does not change greatly. Therefore, when duration in which the first carrier is restricted does not exceed the first duration, the terminal device may not send the measurement result of the first carrier after the terminal device restores the capability of measuring the first carrier and obtains the measurement result of the first carrier. Therefore, a quantity of pieces of signaling can be reduced, and resources can be saved. The terminal device reports the measurement result of the first carrier when the preset measurement reporting condition is met. In this way, this can also be more compatible with the conventional technology.

In this implementation, after receiving the third information, the network device determines that duration in which the first carrier is restricted does not exceed the first duration. In this case, after receiving the third information, the network device may determine, without a need of waiting for the measurement result of the first carrier, that the first carrier can be activated, that restriction of the first carrier is canceled, that resource scheduling on the first carrier can be restored, or that uplink/downlink data transmission on the first carrier can be restored.

The following analyzes, by using a specific example, beneficial effects brought by the second condition including that the terminal device restores the capability of measuring the first carrier.

For example, the second condition is the preset measurement reporting condition. The preset measurement reporting condition is an event A2. A definition of the event A2 includes: Signal quality of a serving cell is lower than a threshold. When determining that signal quality of the first carrier is lower than the threshold (meets the event A2), the terminal device reports the measurement result of the first carrier. When determining that the signal quality of the first carrier is not lower than the threshold (does not meet the event A2), the terminal device does not report the measurement result of the first carrier.

After receiving the third message, if the network device receives no measurement result of the first carrier, the network device considers that the signal quality of the first carrier does not meet the event A2, and considers that the signal quality of the first carrier is good. When a data volume of a downlink service sent by the network device to the terminal device is large, an activated carrier needs to be increased to meet a service rate requirement. If actual signal quality of the first carrier on which restriction is canceled is poor, but the terminal device does not send the measurement report of the first carrier to the network device, because the network device receives no measurement result of the first carrier after determining that restriction of the first carrier is canceled, before receiving the measurement result of the first carrier (for example, a measurement report triggered by the event A2), the network device considers that the signal quality of the first carrier is good. Then, the network device may activate the first carrier with poor actual signal quality. Consequently, radio resources are wasted, power consumption of the terminal device is increased, and a bit error and a packet loss are caused.

In addition, because the network device receives no measurement result of the first carrier after determining that restriction of the first carrier is canceled, the network device cannot determine whether the terminal device does not obtain the measurement result of the first carrier, or the terminal device has performed measurement and obtained the measurement result of the first carrier but does not trigger measurement reporting. If the network device waits for a long time before activating the carrier, service experience is affected.

For the problem, in this embodiment of this application, the second condition may include: The terminal device restores the capability of measuring the first carrier. This may also be understood as that in this embodiment, a new measurement reporting event is added. After restoring the capability of measuring the first carrier, the terminal device may trigger reporting of the measurement result of the first carrier without waiting for the preset measurement reporting condition (for example, the event A2) to be met. Therefore, the network device can learn, in a timely manner, the signal quality of the first carrier on which restriction is canceled, so that the network device performs RRM management (for example, an operation such as carrier activation, carrier deletion, or a carrier change) on the carrier. For example, the network device may subsequently determine, based on factors such as the signal quality of the first carrier, whether the first carrier needs to be activated. When determining to activate the first carrier, the network device sends carrier activation information to the terminal device. Correspondingly, the terminal device receives the carrier activation information from the network device. The carrier activation information is used to activate the first carrier.

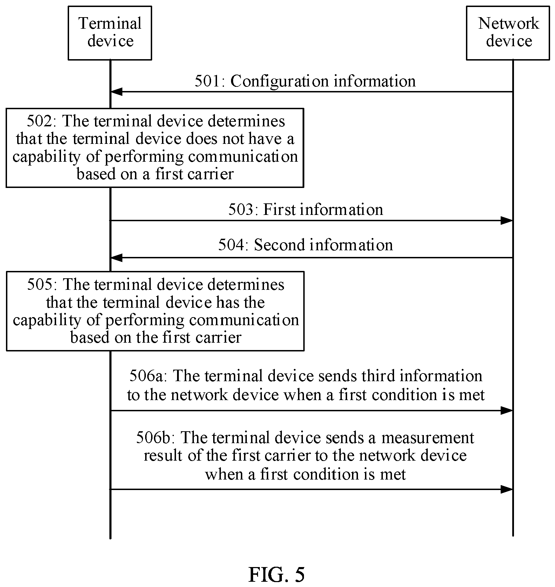

Based on embodiments shown in FIG. 1A, FIG. 1B, FIG. 1C, FIG. 2A, FIG. 2B, FIG. 3, and FIG. 4A, and other content, FIG. 5 is an example diagram of a communication method according to an embodiment of this application. FIG. 5 may be considered as an extended embodiment of the embodiment shown in FIG. 3. Descriptions about an entity for executing the method in FIG. 5 is similar to the descriptions about the entity for executing the method in FIG. 3. Details are not described again.

As shown in FIG. 5, the method includes the following steps.

**Step 501:** A network device sends configuration information to a terminal device.

For related descriptions of step 501, refer to the related descriptions of step 401.

**Step 502:** The terminal device determines that the terminal device does not have a capability of performing communication based on a first carrier.

For related descriptions of step 502, refer to the related descriptions of step 402.

**Step 503:** The terminal device sends first information to the network device.

For related descriptions of step 503, refer to the related descriptions of step 403.

**Step 504:** The network device sends second information to the terminal device, where the second information indicates to stop data transmission on the first carrier.

For related descriptions of step 504, refer to the related descriptions of step 404.

**Step 505:** The terminal device determines that the terminal device has the capability of performing communication based on the first carrier.

For related descriptions of step 505, refer to the related descriptions of step 405.

**Step 506a:** The terminal device sends third information to the network device when a first condition is met.

Correspondingly, the network device receives the third information.

The first condition includes that the terminal device restores a capability of measuring the first carrier. The first condition further includes one of a condition 1 and a condition 2.

**Condition 1:** Signal quality of the first carrier is greater than a preset signal quality threshold.

The preset signal quality threshold may be configured by a network. For example, the preset signal quality threshold may be a threshold of an event A2 (A2-threshold). It can be learned that in the implementation in which the first condition includes the condition 1, the terminal device sends the third information to the network device when determining that the signal quality of the first carrier is good. After restoring the capability of measuring the first carrier, the terminal device may not send the third information when the signal quality of the first carrier is poor (for example, the signal quality of the first carrier is not greater than the preset signal quality threshold). Therefore, a case in which the network device activates a carrier with poor actual signal quality can be avoided. Then, a bit error and/or a packet loss can be reduced, and a waste of radio resources and energy consumption overheads of the terminal device are reduced.

In a possible implementation, when the condition 1 is met, the preset measurement reporting condition may not be met. For example, the preset measurement reporting event includes an event A2 and/or an event A6. An event definition of the event A2 includes: Signal quality of a serving cell is lower than a threshold. An event definition of the event A6 includes: Signal quality of a neighboring cell is higher than that of the serving cell SCell by an offset. It can be learned that both the event A2 and the event A6 may be triggered when the signal quality of the first carrier is poor. Therefore, the condition 1 may also be understood as follows: The signal quality of the first carrier is greater than the preset signal quality threshold (the preset signal quality threshold may be greater than the threshold defined in the event A2), and the signal quality of the first carrier does not meet the event A2 and/or the event A6.

**Condition 2:** Preset measurement reporting condition.

There are a plurality of preset measurement reporting conditions. For example, if the network device configures the terminal device to periodically report a measurement result of the first carrier, the network device reports the measurement result of the first carrier to the network device at a moment that is configured by the network device for reporting the measurement result of the first carrier. For another example, if the network device configures the terminal device to report the measurement result of the first carrier when a preset event is met, the terminal device reports the measurement result of the first carrier to the network device when determining that the preset event is met. For related content, refer to the foregoing descriptions. Details are not described again.

The terminal device sends the third information after restoring the capability of measuring the first carrier and when the preset measurement reporting condition is met. Therefore, the terminal device may further report the measurement result of the first carrier. In another possible implementation, the third information and the measurement result of the first carrier may be two different pieces of information, and the two pieces of information may be carried in one message or two messages.

In a possible implementation, the third information includes the measurement result of the first carrier. This may also be understood as that the third information is the measurement result of the first carrier. In this implementation, step 506a may alternatively be step 506b.

**Step 506b:** The terminal device sends the measurement result of the first carrier to the network device when the first condition is met.

It can be learned that in this implementation, the measurement result of the first carrier may indicate that the terminal device has the capability of performing communication based on the first carrier, and the terminal device restores the capability of measuring the first carrier. In other words, the measurement result of the first carrier may implicitly indicate content indicated by the third information. When receiving the measurement result of the first carrier, the network device may determine that the terminal device has the capability of performing communication based on the first carrier, and may manage the first carrier based on the measurement result of the first carrier. In this manner, signaling overheads for sending by the terminal device can be reduced. In addition, the network device may perform a corresponding carrier management operation based on the measurement result of the first carrier, so that a bit error and/or a packet loss, a waste of radio resources, and energy consumption overheads of UE that are caused by mistakenly activating a carrier with poor signal quality by the network device can be avoided.

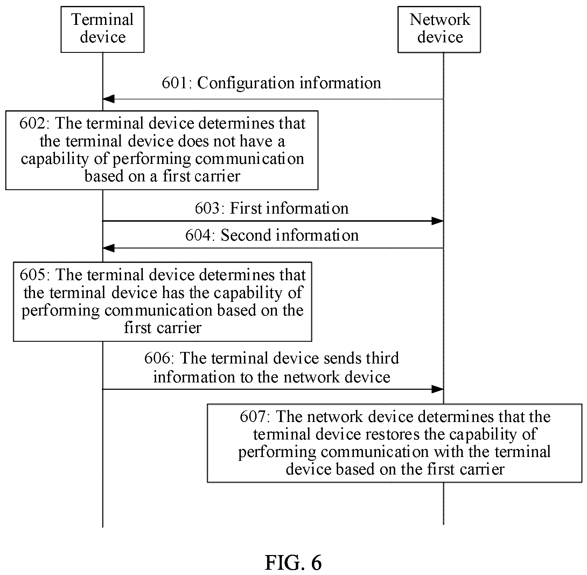

Based on embodiments shown in FIG. 1A, FIG. 1B, FIG. 1C, FIG. 2A, FIG. 2B, FIG. 3, FIG. 4A, and FIG. 5, and other content, **FIG. 6** is an example diagram of a communication method according to an embodiment of this application. FIG. 6 may be considered as an extended embodiment of the embodiment shown in FIG. 3. Descriptions about an entity for executing the method in FIG. 5 is similar to the descriptions about the entity for executing the method in FIG. 3. Details are not described again.

As shown in FIG. 6, the method includes the following steps.

**Step 601:** A network device sends configuration information to a terminal device.

For related descriptions of step 601, refer to the related descriptions of step 401.

**Step 602:** The terminal device determines that the terminal device does not have a capability of performing communication based on a first carrier.

For related descriptions of step 602, refer to the related descriptions of step 402.

**Step 603:** The terminal device sends first information to the network device.

For related descriptions of step 603, refer to the related descriptions of step 403.

**Step 604:** The network device sends second information to the terminal device.

For related descriptions of step 604, refer to the related descriptions of step 404.

**Step 605:** The terminal device determines that the terminal device has the capability of performing communication based on the first carrier.

For related descriptions of step 605, refer to the related descriptions of step 405.

**Step 606:** The terminal device sends third information to the network device.

Step 607: The network device determines that the terminal device restores the capability of performing communication with the terminal device based on the first carrier.

In step 607, there are a plurality of possible implementations. The following provides example descriptions by using an implementation 1, an implementation 2, and an implementation 3.

### Implementation 1

The third information further indicates that when no measurement result reported by the terminal device based on a preset second event is received before a first moment, data transmission on the first carrier is allowed. The first moment is a moment that is after preset second duration starting from a moment at which the network device receives the third message. The second duration may be determined by the network device, or may be predefined in a standard. The second duration is not less than a time interval between a moment at which the network device receives the third message and a l^{st} reference signal resource (SSB/CSI-RS) that may be used to measure the first carrier. Therefore, before the first moment arrives, a first terminal device may measure the first carrier based on the reference signal resource.

In the implementation 1, in a possible implementation, after receiving the third information in step 606, the network device may perform the following step: When receiving, before the first moment, no measurement result reported by the terminal device based on the preset second event, the network device determines that the terminal device restores the capability of performing communication with the terminal device based on the first carrier.

The preset second event is, for example, an event A2 and/or an event A6. In this case, if the network device receives, before the first moment, no measurement result reported by the terminal device based on the preset second event, the network device may determine that the terminal device has measured the first carrier, and signal quality of the first carrier is good (for example, the event A2 and/or the event A6 are/is not met). Therefore, the network device may determine that the terminal device restores the capability of performing communication with the terminal device based on the first carrier.

In another possible implementation, when the network device receives, before the first moment, the measurement result reported by the terminal device based on the preset second event, because the measurement result of the first carrier indicates that the signal quality of the first carrier is poor, the network device may not activate the first carrier, or determine that the terminal device does not restore the capability of performing communication with the terminal device based on the first carrier.

### Implementation 2

The third information further indicates that after the measurement result of the first carrier is received from the terminal device, data transmission on the first carrier is allowed.

In the implementation 2, in a possible implementation, after receiving the third information in step 606, the network device may perform the following step: After receiving the measurement result of the first carrier from the terminal device, the network device determines that the terminal device restores the capability of performing communication with the terminal device based on the first carrier.

In another possible implementation, before receiving the measurement result of the first carrier from the terminal device, even if the network device receives the third information, the network device determines that the terminal device does not restore the capability of performing communication with the terminal device based on the first carrier. In another possible implementation, before reporting the measurement result of the first carrier, the terminal device does not expect the network device to activate the first carrier. For example, before reporting the measurement result of the first carrier, when receiving information that is delivered by the network device and that is used to activate the first carrier, the terminal device still ignores the information, that is, does not activate the first carrier.

In the implementation 2, in a possible implementation, the third information further indicates that when the measurement result of the first carrier is received from the terminal device before the first moment, and the measurement result of the first carrier indicates that signal quality of the first carrier is greater than a preset signal quality threshold, data transmission on the first carrier is allowed.

In the implementation 2, in another possible implementation, after receiving the third information in step 606, the network device may perform the following step: When receiving the measurement result of the first carrier from the terminal device before the first moment, and the measurement result of the first carrier indicates that the signal quality of the first carrier is greater than the preset signal quality threshold, the network device determines that the terminal device restores the capability of performing communication with the terminal device based on the first carrier.

This implementation may be considered as adding a new trigger condition for the terminal device to report the measurement result of the first carrier: The signal quality of the first carrier is greater than the preset signal quality threshold.

In another possible implementation, if the network device receives, before the first moment, no measurement result of the first carrier reported by the terminal device based on the condition "the signal quality of the first carrier is greater than the preset signal quality threshold", even if the network device receives the third information, the network device determines that the terminal device does not restore the capability of performing communication with the terminal device based on the first carrier.

In another description manner, for the first carrier on which measurement is restored, before the signal quality of the first carrier is greater than the preset signal quality threshold, the terminal device does not expect to receive the information that is delivered by the network device and that is used to activate the first carrier. Alternatively, before the signal quality of the first carrier is greater than the preset signal quality threshold, if the terminal device receives the message that is delivered by the network device and that is used to activate the first carrier, the terminal device may ignore the message that is used to activate the first carrier.

### Implementation 3

The third information further indicates that when the measurement result of the first carrier is received from the terminal device before the first moment, and the measurement result of the first carrier indicates that signal quality of the first carrier is greater than a preset signal quality threshold, after the first moment arrives, data transmission on the first carrier is allowed.

In the implementation 3, in another possible implementation, after receiving the third information in step 606, the network device may perform the following step: When the network device receives the measurement result of the first carrier from the terminal device before the first moment, and the measurement result of the first carrier indicates that the signal quality of the first carrier is greater than the preset signal quality threshold, after the first moment arrives, the network device considers that the terminal device has restored the capability of performing communication with the terminal device based on the first carrier. In this embodiment of this application, when the network device determines that the terminal device restores the capability of performing communication with the terminal device based on the first carrier, the network device may activate the first carrier. That the network device determines that the terminal device restores the capability of performing communication with the terminal device based on the first carrier may alternatively be that the network device determines that the first carrier can be activated. When the network device determines that the terminal device does not restore the capability of performing communication with the terminal device based on the first carrier, the network device may not activate the first carrier. That the network device determines that the terminal device does not restore the capability of performing communication with the terminal device based on the first carrier may alternatively be that the network device determines that the first carrier cannot be activated.

The implementation 3 may be considered as an extended embodiment of a possible implementation of the implementation 2. Before the network device determines that the terminal device restores the capability of performing communication with the terminal device based on the first carrier, a condition "the first moment arrives" is further needed. For example, a timer is started at a moment at which the network device receives the third message (where the timer is set to second duration). When the network device receives the measurement result of the first carrier from the terminal device before the first moment, and the measurement result of the first carrier indicates that the signal quality of the first carrier is greater than the preset signal quality threshold, after the first moment arrives (after the timer expires), the network device determines that the terminal device restores the capability of performing communication with the terminal device based on the first carrier.

In another possible implementation, before the first moment arrives, the network device is not allowed to perform data transmission on the first carrier. Before the first moment arrives, the network device determines that the terminal device does not restore the capability of performing communication with the terminal device based on the first carrier.

In another description manner, for the first carrier on which measurement is restored, before the signal quality of the first carrier is greater than the preset signal quality threshold, and before the first moment, the terminal device does not expect to receive the information that is delivered by the network device and that is used to activate the first carrier. Alternatively, before the signal quality of the first carrier is greater than the preset signal quality threshold and before the first moment, if the terminal device receives the message that is delivered by the network device and that is used to activate the first carrier, the terminal device may ignore the message that is used to activate the first carrier.

It can be learned from the foregoing content that, in this embodiment of this application, after a delay of a period of time after receiving the third information, the network device delivers a message used to activate the first carrier. In the period of time, the network device may wait for the terminal device to measure the first carrier, and wait for the terminal device to determine whether the measurement result of the first carrier needs to be reported. If the terminal device triggers an event A2 or an event A6 for a cell corresponding to the first carrier in the period of time, the network may release an SCell or change the SCell based on a measurement report, but does not activate the first carrier. This solution can reduce problems such as a bit error, a packet loss, a waste of radio resources, and energy consumption overheads of the terminal device that are caused by mistakenly activating a carrier with poor signal quality by the network device. In addition, if the terminal device determines that the signal quality of the first carrier is poor, the terminal device may ignore the message that is delivered by the network device and that is used to activate the first carrier, to reduce problems such as a bit error, a packet loss, a waste of radio resources, and energy consumption overheads of the terminal device that are caused by performing a carrier activation operation (including RF warming up or the like). For other related descriptions of step 606 and step 607, refer to the related descriptions of step 406. Details are not described again.

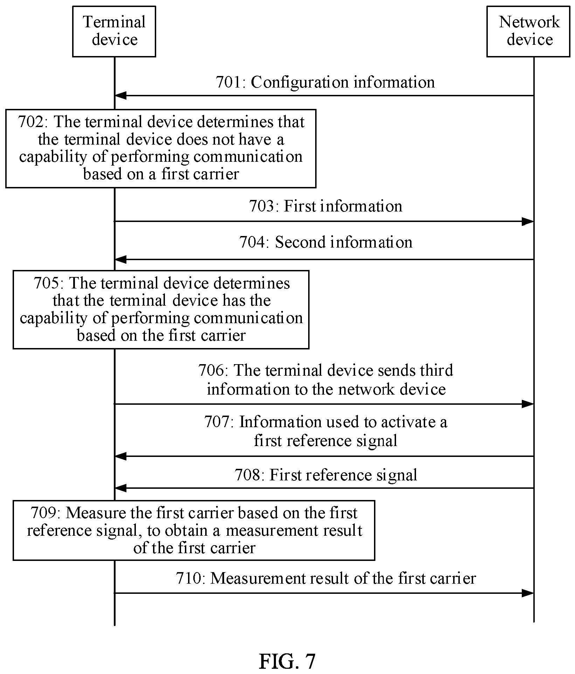

Based on embodiments shown in FIG. 1A, FIG. 1B, FIG. 1C, FIG. 2A, FIG. 2B, FIG. 3, FIG. 4A, FIG. 5, and FIG. 6, and other content, FIG. 7 is an example diagram of a communication method according to an embodiment of this application. FIG. 7 may be considered as an extended embodiment of the embodiment shown in FIG. 3. Descriptions about an entity for executing the method in FIG. 7 is similar to the descriptions about the entity for executing the method in FIG. 3. Details are not described again.

As shown in FIG. 7, the method includes the following steps.

**Step 701:** A network device sends configuration information to a terminal device.

For related descriptions of step 701, refer to the related descriptions of step 401.

**Step 702:** The terminal device determines that the terminal device does not have a capability of performing communication based on a first carrier.

For related descriptions of step 702, refer to the related descriptions of step 402.

**Step 703:** The terminal device sends first information to the network device.

For related descriptions of step 703, refer to the related descriptions of step 403.

**Step 704:** The network device sends second information to the terminal device.

For related descriptions of step 704, refer to the related descriptions of step 404.

**Step 705:** The terminal device determines that the terminal device has the capability of performing communication based on the first carrier.

For related descriptions of step 705, refer to the related descriptions of step 405.

**Step 706:** The terminal device sends third information to the network device.

For related descriptions of step 706, refer to the related descriptions of step 406 or step 606.

**Step 707:** The network device sends, to the terminal device, information used to activate a first reference signal.

The terminal device receives, from the network device, the information used to activate the first reference signal.

In a possible implementation, before step 707, the network device sends configuration information of the first reference signal to the terminal device. The configuration information of the first reference signal may be carried in a radio resource control (Radio Resource Control, RRC) message, for example, an RRC reconfiguration message. The terminal device receives the configuration information of the first reference signal from the network device. The configuration information of the first reference signal may be carried in the configuration information sent by the network device in step 701, or may be carried in another message. The first reference signal may include, for example, a channel state information reference signal (channel state information reference signal, CSI-RS). The network device may configure the first reference signal for one or more serving cells. The configuration information of the first reference signal may include frequency domain information (for example, a measurement bandwidth and a start physical resource block (physical resource block, PRB) location) of the first reference signal, time domain information (for example, a periodicity and an offset) of the first reference signal, and the like.

In a possible implementation, a time domain density (a periodicity) of the first reference signal may be greater than a time domain density of another reference signal, and/or a frequency domain density of the first reference signal may be greater than a frequency domain density of the another reference signal. Therefore, when the terminal device restores the capability of performing communication based on the first carrier, the terminal device can more quickly obtain a reference signal resource that may be used to measure the first carrier, to measure the first carrier more quickly.

The information used to activate the first reference signal in step 707 may be carried in a MAC CE, RRC signaling, or physical layer signaling (for example, downlink control information (Downlink Control Information, DCI)). In comparison with a solution in which the information used to activate the first reference signal is included in an RRC message, when the information used to activate the first reference signal may be included in the DCI or the MAC CE, because a transmission delay and a processing delay of bottom layer signaling are lower, the terminal device can receive activation information more quickly.

**Step 708:** The network device sends the first reference signal to the terminal device.

The terminal device receives the first reference signal from the network device.

**Step 709:** The terminal device measures the first carrier based on the first reference signal, to obtain a measurement result of the first carrier.

Correspondingly, the network device receives the measurement result of the first carrier from the terminal device. The measurement result of the first carrier is obtained by measuring the first carrier based on the first reference signal. For remaining related descriptions of step 709, refer to the related descriptions of step 407.

**Step 710:** The terminal device sends the measurement result of the first carrier to the network device.

For related descriptions of step 710, refer to the related descriptions of step 408.

In a possible implementation, after step 710, the terminal device may receive, from the network device, information indicating to deactivate the first reference signal. After receiving the information indicating to deactivate the first reference signal, the terminal device stops measurement based on the first reference signal.

It can be learned from the foregoing content that because the network device may configure the configuration information of the first reference signal in advance, the terminal may learn of the configuration information of the first reference signal in advance, for example, a time domain position and a frequency domain position. When the terminal device restores the capability of performing communication based on the first carrier, if the terminal device receives, from the network device, the information used to activate the first reference signal, the terminal device may determine a location of the first reference signal based on the configuration information, to measure the first carrier based on the first reference signal more quickly.

Because the network device may dynamically activate the first reference signal by using activation information of the first reference signal, the network device may send the first reference signal in a specific scenario (for example, in a scenario in which the terminal device stops carrier measurement due to a hardware resource conflict, and restores the measurement capability after the hardware resource is released), to ensure that the terminal device obtains the measurement result of the first carrier more quickly, and the network device does not need to send the first reference signal at other time. Therefore, a case in which the first reference signal occupies a radio resource unnecessarily to affect a data transmission rate can be avoided. After receiving the activation information of the first reference signal from the network device, the terminal device learns that the terminal device may start to perform measurement based on the first reference signal. UE does not need to obtain the first reference signal before receiving the information used to activate the first reference signal.

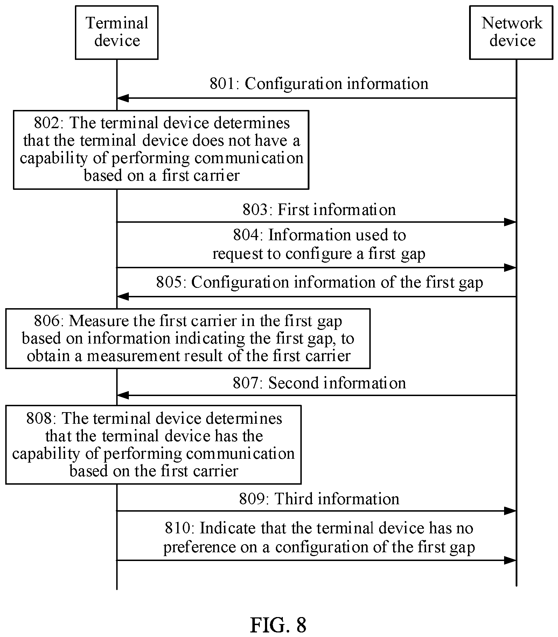

Based on embodiments shown in FIG. 1A, FIG. 1B, FIG. 1C, FIG. 2A, FIG. 2B, and FIG. 3, and other content, **FIG. 8** is an example diagram of a communication method according to an embodiment of this application. FIG. 8 may be considered as an extended embodiment of the embodiment shown in FIG. 3. Descriptions about an entity for executing the method in FIG. 8 is similar to the descriptions about the entity for executing the method in FIG. 3. Details are not described again.

As shown in FIG. 8, the method includes the following steps.

**Step 801:** A network device sends configuration information to a terminal device.

For related descriptions of step 801, refer to the related descriptions of step 301.

**Step 802:** The terminal device determines that the terminal device does not have a capability of performing communication based on a first carrier.

For related descriptions of step 802, refer to the related descriptions of step 402.

**Step 803:** The terminal device sends first information to the network device.

For content of step 803, refer to the content of step 302. A difference between step 803 and step 302 lies in that the first information in step 803 indicates to stop data transmission on the first carrier, and the first information may not indicate that the terminal device stops measurement on the first carrier. For remaining related descriptions of step 803, refer to the related descriptions of step 302.

**Step 804:** The terminal device sends, to the network device, information used to request to configure a first gap.

Correspondingly, the network device receives, from the terminal device, the information used to request to configure the first gap.

The first gap is used to measure the first carrier. The information used to request to configure the first gap and the first information may be carried in one message or may be carried in different messages. The information used to request to configure the first gap may further indicate that the first gap is used to measure the first carrier, and/or the information used to request to configure the first gap may be further used to stop measurement on the first carrier due to a reason such as dual-card hardware resource sharing. Therefore, the network device may learn of a function of the first gap, and the network device may also learn that the terminal device has measured the first carrier. If the network device receives no measurement result from the terminal device, the network device may determine that the terminal device does not send the measurement result because the measurement result of the first carrier does not meet a preset measurement reporting condition, but not because the terminal device cannot measure the first carrier. Therefore, the network device may perform carrier management more properly.

In a possible implementation, in step 804, when the terminal device does not have the capability of performing communication based on the first carrier, the terminal device sends, to the network device, the information used to request to configure the first gap. The information used to request to configure the first gap may include at least one of a length, a periodicity, a start location, an offset, or the like of the first gap.

In the first gap, the terminal device may not need to receive, from a serving cell, a signal other than a reference signal used for measurement, and does not need to send data to the serving cell. This is because when a quantity of receivers of the terminal device is insufficient or a bandwidth of a receiver is insufficient to cover a frequency on which the to-be-measured first carrier/first cell (the first cell is a cell corresponding to the first carrier) is located, the terminal device cannot receive and send a signal in the serving cell and perform measurement on the first carrier/first cell simultaneously. In this case, the first gap may be configured to enable the terminal device to leave the current frequency to complete measurement. In the first gap, the network device stops uplink and downlink scheduling, and the terminal device does not send or receive any data, but adjusts the receiver to the frequency of the first carrier/first cell to perform measurement. After the first gap ends, data transmission in the serving cell continues.

For example, the information used to request to configure the first gap may be UE assistance information. The information used to request to configure the first gap may be included in MUSIM assistance information. In step 804, the network device may be a network device associated with a communication system with which the terminal device performs communication based on the first carrier, or may be a network device associated with another communication system. The first gap may be used for working in the communication system with which the terminal device performs communication based on the first carrier or may be used for working in the another communication system.

A sequence of step 804 and step 803 is not strictly limited. For example, step 804 may be first performed, then step 803 is performed, or two pieces of information in step 803 and step 804 are carried in one message.

**Step 805:** The terminal device receives configuration information of the first gap from the network device.

**Step 806:** The terminal device measures the first carrier in the first gap based on the configuration information of the first gap, to obtain a measurement result of the first carrier.

After step 806, in a possible implementation, if the measurement result of the first carrier meets a preset measurement reporting condition, the terminal device may report the measurement result of the first carrier. If the measurement result of the first carrier does not meet the preset measurement reporting condition, the terminal device may not report the measurement result of the first carrier.

In another possible implementation, when obtaining the measurement result of the first carrier and determining that the terminal device restores the capability of performing communication based on the first carrier, the terminal device sends the measurement result of the first carrier to the network device. This implementation may also be understood as adding a new trigger condition for triggering the terminal device to report the measurement result of the first carrier. The trigger condition is that the terminal device obtains the measurement result of the first carrier and the terminal device determines that the terminal device restores the capability of performing communication based on the first carrier.

**Step 807:** The network device sends second information to the terminal device.

For related descriptions of step 807, refer to the related descriptions of step 404.

**Step 808:** The terminal device determines that the terminal device has the capability of performing communication based on the first carrier.

For related descriptions of step 808, refer to the related descriptions of step 405.

**Step 809:** The terminal device sends third information to the network device.

For related descriptions of step 809, refer to the related descriptions of step 406 or step 606.

**Step 810:** The terminal device sends, to the network device, information indicating that the terminal device has no preference on a configuration of the first gap.

Correspondingly, the network device receives, from the terminal device, the information indicating that the terminal device has no preference on the configuration of the first gap.

Because the terminal device can perform communication based on the first carrier after restoring the capability of performing communication based on the first carrier, the terminal device may also measure the first carrier in time other than the first gap. Therefore, the terminal device does not need to request the first gap from the network device to measure the first carrier. The terminal device sends, to the network device, the information indicating that the terminal device has no preference on the configuration of the first gap, so that the network device can cancel the configuration of the first gap, to reduce resource consumption and optimize service experience.

In a possible implementation, in step 810, the terminal device may send UE assistance information to the network device. The UE assistance information indicates that the terminal device has no preference on the configuration of the first gap. For example, in a possible implementation, the terminal device does not include the configuration of the first gap in the UE assistance information. When the network device receives the UE assistance information, because the UE assistance information does not include the configuration of the first gap, the network device may determine that the terminal device stops preference on the configuration of the first gap, and the network device may cancel the configuration of the first gap, to reduce resource consumption and optimize service experience. This solution can be more compatible with the conventional technology.

In another possible implementation, step 810 may not be performed. The third information in step 809 further indicates that the terminal device has no preference on the configuration of the first gap. For example, the network device receives the third information, and determines that the terminal device restores the capability of performing communication based on the first carrier. Therefore, the network device may determine that the terminal device no longer expects or has no preference on the configuration of the first gap.

It can be learned from the foregoing content that, in this embodiment of this application, the terminal device may request the first gap from the network, to measure the first carrier in the first gap when measurement cannot be performed on the first carrier due to an insufficient hardware capability. In addition, the information used to request to configure the first gap may further implicitly indicate, to the network device, that the terminal device cannot measure the first carrier. The embodiment shown in FIG. 8 may also be combined with the foregoing embodiments. In a possible implementation, if the network device does not configure the first gap for the terminal device, the terminal device may use the embodiment shown in any one of FIG. 3, FIG. 4A, FIG. 5, FIG. 6, or FIG. 7.

It should be noted that names of the foregoing messages are merely used as examples. With evolution of communication technologies, a name of any of the foregoing messages may change. However, regardless of how the names of the messages change, the messages fall within the protection scope of this application provided that meanings of the messages are the same as those of the foregoing messages in this application.

The foregoing mainly describes, from a perspective of interactions between the network elements, the solutions in embodiments of this application. It can be understood that, to implement the foregoing functions, the foregoing network elements include corresponding hardware structures and/or corresponding software modules for performing the functions. A person of ordinary skill in the art should easily be aware that, in combination with units and algorithm steps of the examples described in embodiments disclosed in this specification, the present invention may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of the present invention.

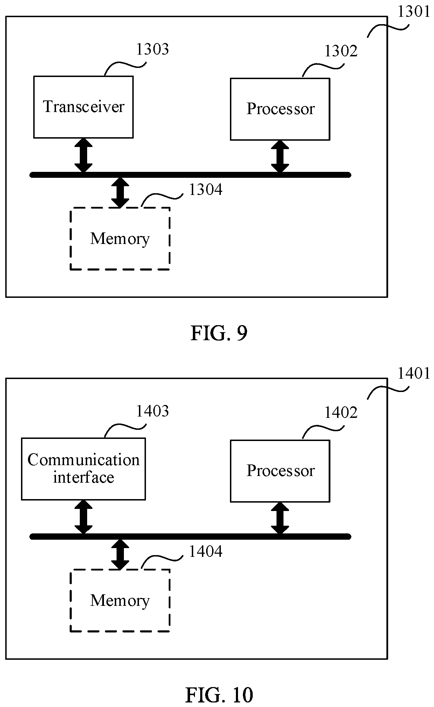

According to the foregoing method, FIG. 9 is a diagram of a structure of a communication apparatus according to an embodiment of this application. As shown in FIG. 9, the communication apparatus may be a terminal device or a network device, or may be a chip or a circuit, for example, a chip or a circuit that may be disposed in the terminal device, or a chip or a circuit that may be disposed in the network device.

The communication apparatus 1301 includes a processor 1302 and a transceiver 1303. The communication apparatus 1301 may implement the method on the terminal device side or the network device side in the related solution in FIG. 3, FIG. 4A, FIG. 5, FIG. 6, FIG. 7, or FIG. 8.

Further, the communication apparatus 1301 may include a memory 1304. In the figure, the memory 1304 is a dashed line, which further identifies that the memory is optional.

Further, the communication apparatus 1301 may further include a bus system. The processor 1302, the memory 1304, and the transceiver 1303 may be connected through the bus system.

It should be understood that the processor 1302 may be a chip. For example, the processor 1302 may be a field programmable gate array (field programmable gate array, FPGA), an application specific integrated circuit (application specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable logic device (programmable logic device, PLD), or another integrated chip.

In an implementation process, steps of the foregoing methods may be implemented by using an integrated logic circuit of hardware in the processor 1302 or instructions in a form of software. The steps of the methods disclosed with reference to embodiments of this application may be directly performed by a hardware processor, or may be performed by using a combination of hardware in the processor 1302 and a software module. A software module may be located in a mature storage medium in the art, for example, a random access memory, a flash memory, a read-only memory, a programmable read-only memory, an electrically erasable programmable memory, or a register. The storage medium is located in the memory 1304, and the processor 1302 reads information in the memory 1304 and completes the steps in the foregoing methods in combination with hardware of the processor.

It may be understood that the memory 1304 in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

When the communication apparatus 1301 is the terminal device, in a possible implementation, through the transceiver 1303, the processor 1302 is configured to receive configuration information from the network device, where the configuration information is used to configure a first carrier; and send first information to the network device, where the first information indicates to stop data transmission on the first carrier, and the first information further indicates that the terminal device stops measurement on the first carrier.

When the communication apparatus 1301 is the terminal device, in a possible implementation, through the transceiver 1303, the processor 1302 is specifically configured to send the first information to the network device when the terminal device does not have a capability of performing communication based on the first carrier.

When the communication apparatus 1301 is the terminal device, in a possible implementation, through the transceiver 1303, the processor 1302 is further configured to receive second information from the network device, where the second information indicates to stop data transmission on the first carrier.

When the communication apparatus 1301 is the terminal device, in a possible implementation, through the transceiver 1303, the processor 1302 is further configured to send third information to the network device, where the third information indicates that the terminal device has the capability of performing communication based on the first carrier, and the third information further indicates that the terminal device restores a capability of measuring the first carrier.

When the communication apparatus 1301 is the terminal device, in a possible implementation, through the transceiver 1303, the processor 1302 is specifically configured to send the third information to the network device when a first condition is met.

When the communication apparatus 1301 is the terminal device, in a possible implementation, through the transceiver 1303, the processor 1302 is further configured to send a measurement result of the first carrier to the network device when a second condition is met.

When the communication apparatus 1301 is the terminal device, in a possible implementation, through the transceiver 1303, the processor 1302 is further configured to: receive, from the network device, information used to activate a first reference signal, receive the first reference signal from the network device, and measure the first carrier based on the first reference signal, to obtain the measurement result of the first carrier.

When the communication apparatus 1301 is the terminal device, in a possible implementation, through the transceiver 1303, the processor 1302 is configured to: receive the configuration information from the network device, where the configuration information is used to configure the first carrier; send the first information to the network device, where the first information indicates to stop data transmission on the first carrier; and send, to the network device, information used to request to configure a first gap, where the first gap is used to measure the first carrier.

When the communication apparatus 1301 is the network device, in a possible implementation, through the transceiver 1303, the processor 1302 is configured to send configuration information to the terminal device, where the configuration information is used to configure a first carrier; and receive first information from the terminal device, where the first information indicates to stop data transmission on the first carrier, and the first information further indicates that the terminal device stops measurement on the first carrier.

When the communication apparatus 1301 is the network device, in a possible implementation, through the transceiver 1303, the processor 1302 is further configured to send second information to the terminal device, where the second information indicates to stop data transmission on the first carrier.

When the communication apparatus 1301 is the network device, in a possible implementation, through the transceiver 1303, the processor 1302 is further configured to receive third information from the terminal device, where the third information indicates that the terminal device has a capability of performing communication based on the first carrier, and the third information further indicates that the terminal device restores a capability of measuring the first carrier.

When the communication apparatus 1301 is the network device, in a possible implementation, through the transceiver 1303, the processor 1302 is further configured to receive a measurement result of the first carrier from the terminal device.

When the communication apparatus 1301 is the network device, in a possible implementation, the processor 1302 is further configured to perform one of the following content through the transceiver 1303:
after receiving the measurement result of the first carrier from the terminal device, determining that the terminal device restores the capability of performing communication with the terminal device based on the first carrier;
when receiving, before a first moment, no measurement result reported by the terminal device based on a preset second event, determining that the terminal device restores the capability of performing communication with the terminal device based on the first carrier, where the first moment is a moment that is after preset second duration starting from a moment at which the network device receives the third information;
when receiving the measurement result of the first carrier from the terminal device before a first moment, and the measurement result of the first carrier indicates that signal quality of the first carrier is greater than a preset signal quality threshold, determining that the terminal device restores the capability of performing communication with the terminal device based on the first carrier; or
when receiving the measurement result of the first carrier from the terminal device before a first moment, and the measurement result of the first carrier indicates that signal quality of the first carrier is greater than a preset signal quality threshold, after the first moment arrives, determining that the terminal device restores the capability of performing communication with the terminal device based on the first carrier.

When the communication apparatus 1301 is the network device, in a possible implementation, through the transceiver 1303, the processor 1302 is further configured to: send, to the terminal device, information used to activate a first reference signal; send the first reference signal to the terminal device; and receive the measurement result of the first carrier from the terminal device, where the measurement result of the first carrier is obtained by measuring the first carrier based on the first reference signal.

When the communication apparatus 1301 is the network device, in a possible implementation, through the transceiver 1303, the processor 1302 is configured to: send the configuration information to the terminal device, where the configuration information is used to configure the first carrier; receive the first information from the terminal device, where the first information indicates to stop data transmission on the first carrier; and receive, from the terminal device, information used to request to configure a first gap, where the first gap is used to measure the first carrier.

For concepts, explanations, detailed descriptions, and other steps of the communication apparatus that are related to the technical solutions provided in embodiments of this application, refer to the descriptions of the content in the foregoing methods or other embodiments. Details are not described herein again.

According to the foregoing method, FIG. 10 is a diagram of a structure of communication apparatus according to an embodiment of this application. As shown in FIG. 10, the communication apparatus 1401 may include a communication interface 1403 and a processor 1402. Further, the communication apparatus 1401 may include a memory 1404. In the figure, the memory 1404 is a dashed line, which further identifies that the memory is optional. The communication interface 1403 is configured to input and/or output information. The processor 1402 is configured to execute a computer program or instructions, so that the communication apparatus 1401 implements the method on the terminal device side in the related solution in FIG. 3, FIG. 4A, FIG. 5, FIG. 6, FIG. 7, or FIG. 8, or the communication apparatus 1401 implements the method on the network device side in the related solution in FIG. 3, FIG. 4A, FIG. 5, FIG. 6, FIG. 7, or FIG. 8. In this embodiment of this application, the communication interface 1403 may implement the solution implemented by the transceiver 1303 in FIG. 9, the processor 1402 may implement the solution implemented by the processor 1302 in FIG. 9, and the memory 1404 may implement the solution implemented by the memory 1304 in FIG. 9. Details are not described herein again.

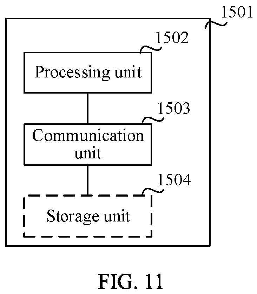

Based on the foregoing embodiments and a same concept, FIG. 11 is a diagram of a communication apparatus according to an embodiment of this application. As shown in FIG. 11, the communication apparatus 1501 may be a terminal device or a network device, or may be a chip or a circuit, for example, a chip or a circuit that may be disposed in the terminal device or the network device.

The communication apparatus 1501 includes a processing unit 1502 and a communication unit 1503. Further, the communication apparatus 1501 may include a storage unit 1504 or may not include the storage unit 1504. In the figure, the storage unit 1504 is a dashed line, which further identifies that the memory is optional.

The communication apparatus may correspond to the terminal device in the foregoing method. The communication apparatus may implement steps performed by the terminal device in any one or more of the corresponding methods shown in FIG. 3, FIG. 4A, FIG. 5, FIG. 6, FIG. 7, or FIG. 8. The communication apparatus may include the processing unit 1502, the communication unit 1503, and the storage unit 1504.

When the communication apparatus 1501 is the terminal device, in a possible implementation, through the communication unit 1503, the processing unit 1502 is configured to receive configuration information from the network device, where the configuration information is used to configure a first carrier; and send first information to the network device, where the first information indicates to stop data transmission on the first carrier, and the first information further indicates that the terminal device stops measurement on the first carrier.

When the communication apparatus 1501 is the terminal device, in a possible implementation, through the communication unit 1503, the processing unit 1502 is configured to: receive the configuration information from the network device, where the configuration information is used to configure the first carrier; send the first information to the network device, where the first information indicates to stop data transmission on the first carrier; and send, to the network device, information used to request to configure a first gap, where the first gap is used to measure the first carrier.

When the communication apparatus 1501 is the network device, in a possible implementation, through the communication unit 1503, the processing unit 1502 is configured to send configuration information to the terminal device, where the configuration information is used to configure a first carrier; and receive first information from the terminal device, where the first information indicates to stop data transmission on the first carrier, and the first information further indicates that the terminal device stops measurement on the first carrier.

When the communication apparatus 1501 is the network device, in a possible implementation, through the communication unit 1503, the processing unit 1502 is configured to: send the configuration information to the terminal device, where the configuration information is used to configure the first carrier; receive the first information from the terminal device, where the first information indicates to stop data transmission on the first carrier; and receive, from the terminal device, information used to request to configure a first gap, where the first gap is used to measure the first carrier.

For concepts, explanations, detailed descriptions, and other steps of the communication apparatus that are related to the technical solutions provided in embodiments of this application, refer to the descriptions of the content in the foregoing methods or other embodiments. Details are not described herein again.

It may be understood that for a function of each unit in the communication apparatus 1501, refer to implementations of corresponding method embodiments. Details are not described herein again.

It should be understood that division into units of the communication apparatus is merely logical function division. During actual implementation, all or some of the units may be integrated into a physical entity, or may be physically separated. In this embodiment of this application, the communication unit 1503 may be implemented by the transceiver 1303 in FIG. 9, and the processing unit 1502 may be implemented by the processor 1302 in FIG. 9.

Based on the methods provided in embodiments of this application, this application further provides a computer program product. The computer program product includes: computer program code or instructions. When the computer program code or the instructions are run on a computer, the computer is enabled to perform the method in any one of embodiments shown in FIG. 3, FIG. 4A, FIG. 5, FIG. 6, FIG. 7, or FIG. 8.

Based on the methods provided in embodiments of this application, this application further provides a computer-readable storage medium. The computer-readable storage medium stores program code. When the program code is run on a computer, the computer is enabled to perform the method in any one of embodiments shown in FIG. 3, FIG. 4A, FIG. 5, FIG. 6, FIG. 7, or FIG. 8.

According to the methods provided in embodiments of this application, this application further provides a chip system. The chip system may include a processor. The processor is coupled to A memory, and may be configured to perform the method in any one of embodiments shown in FIG. 3, FIG. 4A, FIG. 5, FIG. 6, FIG. 7, or FIG. 8. Optionally, the chip system further includes the memory. The memory is configured to store a computer program (may also be referred to as code or instructions). The processor is configured to invoke a computer program from the memory and run the computer program, so that a device on which the chip system is installed performs the method in any one of the embodiments shown in FIG. 3, FIG. 4A, FIG. 5, FIG. 6, FIG. 7, or FIG. 8.

According to the methods provided in embodiments of this application, this application further provides a system. The system includes the foregoing one or more terminal devices and the foregoing one or more network devices.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state drive, SSD)), or the like.

It should be noted that a part of this patent application document includes content protected by copyright. A copyright owner reserves the copyright except copies made for the patent document or the recorded content of the patent document in the China National Intellectual Property Administration.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, the processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. When functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, configuration information, wherein the configuration information is used to configure a first carrier; and
sending, by the terminal device, first information, wherein the first information indicates to stop data transmission on the first carrier, and the first information further indicates that the terminal device stops measurement on the first carrier.

2. The method according to claim 1, wherein the sending, by the terminal device, first information comprises:
sending, by the terminal device, the first information when the terminal device does not have a capability of performing communication based on the first carrier.

3. The method according to claim 1 or 2, wherein after the sending, by the terminal device, first information, the method further comprises:
receiving, by the terminal device, second information, wherein the second information indicates to stop data transmission on the first carrier.

4. The method according to any one of claims 1 to 3, wherein after the sending, by the terminal device, first information, the method further comprises:
sending, by the terminal device, third information, wherein the third information indicates that the terminal device has the capability of performing communication based on the first carrier, and the third information further indicates that the terminal device restores a capability of measuring the first carrier.

5. The method according to claim 4, wherein the sending, by the terminal device, third information comprises:
sending, by the terminal device, the third information when a first condition is met, wherein
the first condition comprises at least one of the following content:
the terminal device restores the capability of measuring the first carrier; or
signal quality of the first carrier is greater than a preset signal quality threshold; or a preset measurement reporting condition.

6. The method according to claim 4 or 5, wherein the third information comprises a measurement result of the first carrier; and
the measurement result of the first carrier indicates that the terminal device has the capability of performing communication based on the first carrier, and the terminal device restores the capability of measuring the first carrier.

7. The method according to any one of claims 1 to 5, wherein after the sending, by the terminal device, first information, the method further comprises:
sending, by the terminal device, a measurement result of the first carrier when a second condition is met, wherein
the second condition comprises at least one of the following content:
the terminal device restores the capability of measuring the first carrier; or
the preset measurement reporting condition.

8. The method according to any one of claims 4 to 7, wherein after the sending, by the terminal device, third information, the method further comprises:
receiving, by the terminal device, information used to activate a first reference signal;
receiving, by the terminal device, the first reference signal; and
measuring, by the terminal device, the first carrier based on the first reference signal, to obtain the measurement result of the first carrier.

9. A communication method, comprising:
receiving, by a terminal device, configuration information, wherein the configuration information is used to configure a first carrier;
sending, by the terminal device, first information, wherein the first information indicates to stop data transmission on the first carrier; and
sending, by the terminal device, information used to request to configure a first gap, wherein the first gap is used to measure the first carrier.

10. A communication method, comprising:
sending, by a network device, configuration information, wherein the configuration information is used to configure a first carrier; and
receiving, by the network device, first information, wherein the first information indicates to stop data transmission on the first carrier, and the first information further indicates that a terminal device stops measurement on the first carrier.

11. The method according to claim 10, wherein after the receiving, by the network device, first information, the method further comprises:
sending, by the network device, second information, wherein the second information indicates to stop data transmission on the first carrier.

12. The method according to claim 10 or 11, wherein after the receiving, by the network device, first information, the method further comprises:
receiving, by the network device, third information, wherein the third information indicates that the terminal device has a capability of performing communication based on the first carrier, and the third information further indicates that the terminal device restores a capability of measuring the first carrier.

13. The method according to claim 12, wherein the third information comprises a measurement result of the first carrier; and
the measurement result of the first carrier indicates that the terminal device has the capability of performing communication based on the first carrier, and the terminal device restores the capability of measuring the first carrier.

14. The method according to any one of claims 10 to 12, wherein after the receiving, by the network device, first information, the method further comprises:
receiving, by the network device, a measurement result of the first carrier.

15. The method according to any one of claims 12 to 14, wherein after the receiving, by the network device, third information, the method further comprises one of the following content:
after receiving the measurement result of the first carrier from the terminal device, determining, by the network device, that the terminal device restores the capability of performing communication with the terminal device based on the first carrier;
when receiving, before a first moment, no measurement result reported by the terminal device based on a preset second event, determining that the terminal device restores the capability of performing communication with the terminal device based on the first carrier, wherein the first moment is a moment that is after preset second duration starting from a moment at which the network device receives the third information;
when receiving the measurement result of the first carrier from the terminal device before a first moment, and the measurement result of the first carrier indicates that signal quality of the first carrier is greater than a preset signal quality threshold, determining, by the network device, that the terminal device restores the capability of performing communication with the terminal device based on the first carrier; or
when receiving the measurement result of the first carrier from the terminal device before a first moment, and the measurement result of the first carrier indicates that signal quality of the first carrier is greater than a preset signal quality threshold, after the first moment arrives, determining, by the network device, that the terminal device restores the capability of performing communication with the terminal device based on the first carrier.

16. The method according to claim 15, wherein after the receiving, by the network device, third information, the method further comprises:
sending, by the network device, information used to activate a first reference signal;
sending, by the network device, the first reference signal; and
receiving, by the network device, the measurement result of the first carrier, wherein the measurement result of the first carrier is obtained by measuring the first carrier based on the first reference signal.

17. A communication method, comprising:
sending, by a network device, configuration information, wherein the configuration information is used to configure a first carrier;
receiving, by the network device, first information, wherein the first information indicates to stop data transmission on the first carrier; and
receiving, by the network device, information used to request to configure a first gap, wherein the first gap is used to measure the first carrier.

18. A communication apparatus, wherein the apparatus comprises a processing unit and a communication unit, wherein
the communication unit is configured to input and/or output information; and
the processing unit is configured to perform the method according to any one of claims 1 to 9 or perform the method according to any one of claims 10 to 17.

19. A communication apparatus, wherein the apparatus comprises a processor and a memory, wherein
the memory is configured to store an executable program; and
the processor is configured to execute the computer-executable program in the memory, so that the method according to any one of claims 1 to 9 is performed, or the method according to any one of claims 10 to 17 is performed.

20. A communication apparatus, wherein the apparatus comprises a processor and a communication interface, wherein
the communication interface is configured to input and/or output information; and
the processor is configured to execute a computer-executable program, so that the method according to any one of claims 1 to 9 is performed, or the method according to any one of claims 10 to 17 is performed.

21. A computer-readable storage medium, wherein the computer-readable storage medium stores a computer-executable program, and when the computer-executable program is invoked by a computer, the method according to any one of claims 1 to 9 is performed, or the method according to any one of claims 10 to 17 is performed.

22. A chip system, comprising:
a communication interface, configured to input and/or output information; and
a processor, configured to execute a computer-executable program, to enable a device on which the chip system is installed to perform the method according to any one of claims 1 to 9, or perform the method according to any one of claims 10 to 17.
